# EUROPEAN PATENT APPLICATION

(11) **EP 4 683 253 A1**
(43) Date of publication of application: **21.01.2026**
(21) Application number: 24769950.7
(22) Date of filing: 13.03.2024
(51) Int. Cl.: H04L 1/00

(54) **METHOD USED IN NODE FOR WIRELESS COMMUNICATION, AND APPARATUS**

(30) Priority: 16.03.2023 CN 202310266975
(71) Applicant: Apogee Networks, LLC, Dallas, TX 75201 (US)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2024/081361
(87) International publication number: WO 2024/188259

(57) **Abstract**

Disclosed in the present application are a method used in nodes for wireless communication, and an apparatus. The method comprises: a first node receiving a first information block, the first information block being used for determining a first RS resource set, and the first RS resource set comprising one or more RS resources; receiving a second information block, the second information block indicating at least one identifier; and sending first channel information. A first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, J being a positive integer greater than 1; and at least one parameter group amongst the J parameter groups is obtained by training.

## Description

### Technical Field

The present application relates to a transmission method in a wireless communication system and an apparatus, in particular to a transmission method and apparatus for wireless signals in a wireless communication system supporting a cellular network.

### Background Art

In traditional wireless communication, a UE (User Equipment) report may comprise at least one of a variety of auxiliary information, such as CSI (Channel Status Information), auxiliary information related to beam management, auxiliary information related to positioning, etc. Among them, the CSI comprises at least one of a CRI (CSI-RS Resource Indicator), an RI (Rank Indicator), a PMI (Precoding Matrix Indicator), or a CQI (Channel Quality Indicator). A network device selects, according to a report of UE, appropriate transmission parameters, such as a residence cell, an MCS (Modulation and Coding Scheme), a TPMI (Transmitted Precoding Matrix Indicator), a TCI (Transmission Configuration Indication), etc., for the UE. Furthermore, the UE report can be used for optimizing network parameters, such as better cell coverage, switching base stations according to UE positions, etc. As the number of antennas increases, a traditional PMI feedback method will bring about significant redundant overhead. Therefore, in NR R (release) 18, a project for CSI compression based on AI (Artificial Intelligence) or ML (Machine Learning) was initiated.

### Summary of the Invention

Through researches, the applicants have discovered that how to determine a parameter group used by a code used for generating channel information is a key problem.

In view of the above problem, the present application discloses a solution. It should be noted that although many embodiments of the present application are developed for AI/ML, the present application is also applicable to solutions based on traditions, such as those based on linear channel reconstruction; and it is particularly considered that specific channel reconstruction algorithms may be non-standardized or be implemented independently by hardware vendors. Furthermore, adopting a unified UE reporting solution can reduce implementation complexity or improve performance. In the absence of conflicts, embodiments and features in the embodiments in any node of the present application can be applied to any other node. In the absence of conflicts, embodiments and features in the embodiments of the present application may be arbitrarily combined with each other.

As one embodiment, the interpretation of the terminologies in the present application refers to definitions of TS36 series of a standard protocol of 3GPP.

As one embodiment, the interpretation of the terminologies in the present application refers to definitions of TS38 series of the standard protocol of 3GPP.

As one embodiment, the interpretation of the terminologies in the present application refers to definitions of TS37 series of the standard protocol of 3GPP.

As one embodiment, the interpretation of the terminologies in the present application refers to definitions of a standard protocol of the IEEE (Institute of Electrical and Electronics Engineers).

The present application discloses a method used in a first node for wireless communication, characterized by comprising:
receiving a first information block, the first information block being used for indicating a first RS resource set, and the first RS resource set comprising one or more RS resources; receiving a second information block, the second information block indicating at least one identifier; and
sending first channel information,
wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

As one embodiment, problems to be solved in the present application comprise: how to determine which parameter group amongst a plurality of parameter groups is used by a code used for generating channel information.

As one embodiment, the benefit of using the above method is that a coding method for generating channel information can be flexibly adjusted.

As one embodiment, the benefit of using the above method is that by selecting an appropriate coding method, more accurate channel information can be obtained, thereby improving transmission reliability and increasing system capacity.

According to one aspect of the present application, it is characterized in that the at least one identifier is used for indicating or identifying a parameter group used by the first code; or the at least one identifier is used for indicating or identifying at least one of a parameter group used by the first code or a parameter group used by a first decode, and the first channel information is used by a sender of the first information block for an input of the first decode or the first channel information is used by a sender of the first information block for generating an input of the first decode; or the at least one identifier is used for indicating or identifying at least one TCI state; or the at least one identifier is used for indicating or identifying at least one RS resource; or the at least one identifier is used for indicating or identifying at least one training data set.

According to one aspect of the present application, it is characterized in that the training of at least one parameter group amongst the J parameter groups is performed at the first node, or the training of at least one parameter group amongst the J parameter groups is performed by the sender of the first information block, or a performer of the training of at least one parameter group amongst the J parameter groups depends on a training type of at least one parameter group amongst the J parameter groups.

According to one aspect of the present application, it is characterized in that the at least one identifier depends on a training type of at least one parameter group amongst the J parameter groups.

According to one aspect of the present application, it is characterized in that any parameter group amongst the J parameter groups is obtained based on training one training data set in J1 training data sets, and J1 is a positive integer.

According to one aspect of the present application, it is characterized in that the J parameter groups depend on the first RS resource set.

According to one aspect of the present application, it is characterized by comprising:
receiving a third information block,
wherein the at least one identifier comprises one identifier in N identifiers, the third information block configures or indicates part or all of identifiers in the N identifiers, and N is a positive integer greater than 1; and the first information block and the second information block belong to one identical RRC IE, and the third information block and the second information block belong to different RRC IEs.

According to one aspect of the present application, it is characterized in that the first information block and the second information block respectively comprise different RRC IEs; the first information block comprises a report configuration of the first channel information; and the second information block is further used for indicating at least one report configuration, and one report configuration in the at least one report configuration comprises a report configuration of the first channel information.

The present application discloses a method used in a second node for wireless communication, characterized by comprising:
sending a first information block, the first information block being used for indicating a first RS resource set, and the first RS resource set comprising one or more RS resources; sending a second information block, the second information block indicating at least one identifier; and
receiving first channel information,
wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

According to one aspect of the present application, it is characterized in that the at least one identifier is used for indicating or identifying a parameter group used by the first code; or the at least one identifier is used for indicating or identifying at least one of a parameter group used by the first code or a parameter group used by a first decode, and the first channel information is used by a second node for an input of the first decode or the first channel information is used by a second node for generating an input of the first decode; or the at least one identifier is used for indicating or identifying at least one TCI state; or the at least one identifier is used for indicating or identifying at least one RS resource; or the at least one identifier is used for indicating or identifying at least one training data set.

According to one aspect of the present application, it is characterized in that the training of at least one parameter group amongst the J parameter groups is performed at a sender of the first channel information, or the training of at least one parameter group amongst the J parameter groups is performed by the second node, or a performer of the training of at least one parameter group amongst the J parameter groups depends on a training type of at least one parameter group amongst the J parameter groups.

According to one aspect of the present application, it is characterized in that the at least one identifier depends on a training type of at least one parameter group amongst the J parameter groups.

According to one aspect of the present application, it is characterized in that any parameter group amongst the J parameter groups is obtained based on training one training data set in J1 training data sets, and J1 is a positive integer.

According to one aspect of the present application, it is characterized in that the J parameter groups depend on the first RS resource set.

According to one aspect of the present application, it is characterized by comprising:
sending a third information block,
wherein the at least one identifier comprises one identifier in N identifiers, the third information block configures or indicates part or all of identifiers in the N identifiers, and N is a positive integer greater than 1; and the first information block and the second information block belong to one identical RRC IE, and the third information block and the second information block belong to different RRC IEs.

According to one aspect of the present application, it is characterized in that the first information block and the second information block respectively comprise different RRC IEs; the first information block comprises a report configuration of the first channel information; and the second information block is further used for indicating at least one report configuration, and one report configuration in the at least one report configuration comprises a report configuration of the first channel information.

According to one aspect of the present application, it is characterized in that a first decode is used for generating first reconstruction channel information; an input of the first decode comprises the first channel information, or the first channel information is used for generating the input of the first decode; a parameter group used by the first decode is one parameter group amongst P parameter groups, and P is a positive integer; any parameter group amongst the J parameter groups corresponds to one parameter group amongst the P parameter groups; and the parameter group used by the first decode is one parameter group amongst the P parameter groups that corresponds to the parameter group used by the first code.

The present application discloses a first node device used for wireless communication, characterized by comprising:
a first receiver receiving a first information block, the first information block being used for indicating a first RS resource set, and the first RS resource set comprising one or more RS resources; and receiving a second information block, the second information block indicating at least one identifier; and
a first transmitter sending first channel information,
wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

The present application discloses a second node device used for wireless communication, characterized by comprising:
a second transmitter sending a first information block, the first information block being used for indicating a first RS resource set, and the first RS resource set comprising one or more RS resources; and sending a second information block, the second information block indicating at least one identifier; and
a second receiver receiving first channel information,
wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

As one embodiment, compared with the traditional solution, the present application has the following advantages:
- flexibly adjusting a parameter group used by a code used for generating channel information;
- flexibly adjusting a coding method for generating channel information;
- being able to obtain more accurate channel information by selecting an appropriate coding method;
- improving transmission reliability; and
- increasing system capacity.

### Brief Description of the Drawings

Other features, purposes and advantages of the present invention will become more apparent by reading and referring to the detailed description of non-limiting embodiments in the following drawings:
FIG. 1 shows a flowchart of a first information block, a second information block, and first channel information according to one embodiment of the present invention;
FIG. 2 shows a schematic diagram of a network architecture according to one embodiment of the present invention;
FIG. 3 shows a schematic diagram of an embodiment of a radio protocol architecture for a user plane and a control plane according to one embodiment of the present invention;
FIG. 4 shows a schematic diagram of a hardware module of a communication node according to one embodiment of the present invention;
FIG. 5 shows a flowchart of wireless transmission according to one embodiment of the present invention;
FIGS. 6A-6E respectively show schematic diagrams of at least one identifier according to one embodiment of the present invention;
FIGS. 7A-7C respectively show schematic diagrams of a performer of training of at least one parameter group amongst J parameter groups according to one embodiment of the present invention;
FIG. 8 shows a schematic diagram of at least one identifier according to another embodiment of the present invention;
FIG. 9 shows a schematic diagram of a relationship between J parameter groups and J1 training data sets according to one embodiment of the present invention;
FIG. 10 shows a schematic diagram of J parameter groups according to one embodiment of the present invention;
FIGS. 11A-11B respectively show schematic diagrams of a first information block and a second information block according to one embodiment of the present invention;
FIG. 12 shows a flowchart of transmission of first channel information according to one embodiment of the present invention;
FIG. 13 shows a schematic diagram of an artificial intelligence processing system according to one embodiment of the present invention;
FIG. 14 shows a schematic diagram of one code according to one embodiment of the present invention;
FIG. 15 shows a schematic diagram of a first function according to one embodiment of the present invention;
FIG. 16 shows a schematic diagram of one decoding layer group according to one embodiment of the present invention;
FIG. 17 shows a structural block diagram of a processing device for a first node according to one embodiment of the present invention; and
FIG. 18 shows a structural block diagram of a processing device for a second node according to one embodiment of the present invention.

### Detailed Description of Embodiments

The technical solutions of the present application will be further described in detail below in conjunction with the drawings. It should be noted that, in the absence of conflicts, embodiments and features in the embodiments in the present application may be arbitrarily combined with each other.

### Embodiment 1

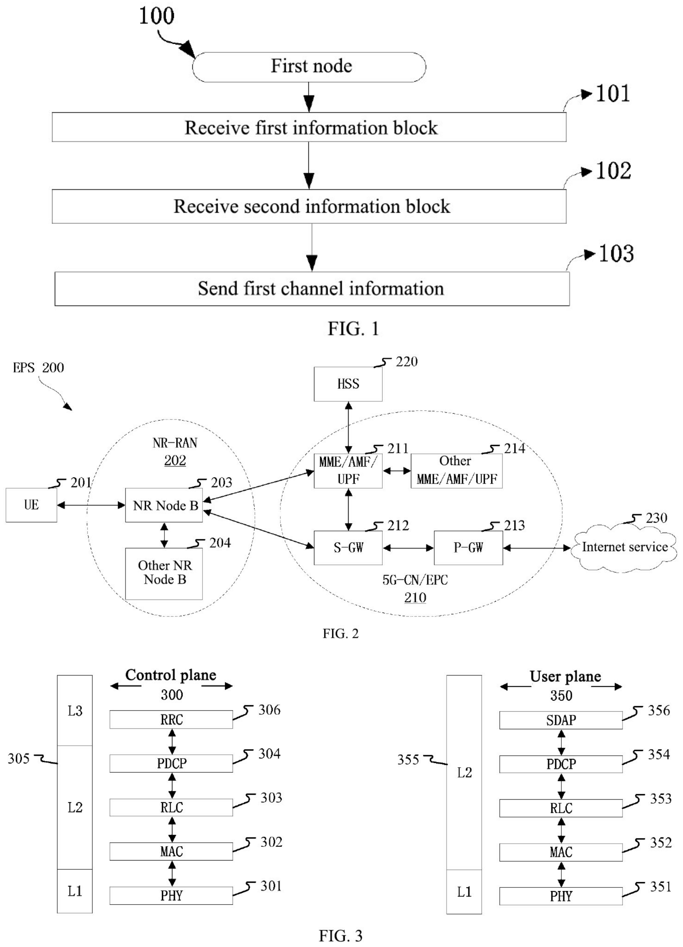

Embodiment 1 illustrates a flowchart of a first information block, a second information block, and first channel information according to one embodiment of the present application, as shown in FIG. 1. In 100 shown in FIG. 1, each block represents one step.

In Embodiment 1, a first node in the present application receives a first information block in step 101; receives a second information block in step 102; and sends first channel information in step 103, wherein the first information block is used for indicating a first RS resource set, and the first RS resource set comprises one or more RS resources; the second information block indicates at least one identifier; a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

As one embodiment, the first information block is carried by higher-layer signaling.

As one embodiment, the first information block is carried by RRC signaling.

As one embodiment, the first information block comprises part or all of fields in one RRC IE (Information Element).

As one embodiment, the first information block comprises part of fields in one RRC IE.

As one embodiment, the first information block comprises one RRC IE.

As one embodiment, the first information block comprises part or all of fields in one or more RRC IEs.

As one embodiment, the first information block comprises part or all of fields in IE CSI-ReportConfig.

As one embodiment, the first information block comprises part of fields in IE CSI-ReportConfig.

As one embodiment, the first information block comprises IE CSI-ReportConfig.

As one embodiment, the first information block comprises part or all of fields in one RRC IE with a name including CSI-ReportConfig.

As one embodiment, the first information block comprises part or all of fields in one RRC IE with a name including ReportConfig.

As one embodiment, the first information block comprises part or all of fields in one RRC IE with a name including CSI.

As one embodiment, the first information block comprises part or all of fields in one RRC IE with a name including gen.

As one embodiment, the first information block comprises part or all of fields in one RRC IE with a name including Gen.

As one embodiment, the first information block comprises a report configuration of the first channel information.

As one embodiment, the first information block comprises part or all of information in a report configuration of the first channel information.

As one embodiment, a report configuration of the first channel information comprises at least one of a report configuration identifier, a report type, a report quantity, an RS resource used for channel measurements, and an RS resource used for interference measurements.

As one sub-embodiment of the above embodiment, the report configuration identifier is used for identifying the report configuration of the first channel information.

As one embodiment, the first information block is used for indicating one resource configuration, and the one resource configuration is used for configuring the first RS resource set.

As one sub-embodiment of the above embodiment, the one resource configuration is one CSI (Channel Status Information) resource configuration.

As one sub-embodiment of the above embodiment, the one resource configuration is one IE CSI-ResourceConfig.

As one sub-embodiment of the above embodiment, the one resource configuration is one IE, and a name of the one resource configuration comprises CSI-ResourceConfig.

As one sub-embodiment of the above embodiment, the first information block comprises a resourcesForChannelMeasurement field, and the resourcesForChannelMeasurement field included in the first information block indicates the one resource configuration.

As one sub-embodiment of the above embodiment, the first information block comprises a resourcesForChannelMeasurement field, and the resourcesForChannelMeasurement field included in the first information block indicates an identifier of the one resource configuration.

As one sub-embodiment of the above embodiment, one resource configuration used for configuring the first RS resource set comprises an identifier or index of each RS resource in the first RS resource set.

As one sub-embodiment of the above embodiment, one resource configuration used for configuring the first RS resource set comprises an identifier of each RS resource in the first RS resource set.

As one sub-embodiment of the above embodiment, one resource configuration used for configuring the first RS resource set is used for configuring each RS resource in the first RS resource set.

As one sub-embodiment of the above embodiment, one resource configuration used for configuring the first RS resource set comprises configuration information of each RS resource in the first RS resource set.

As one embodiment, the first information block further comprises a second RS resource set, and the second RS resource set comprises one or more RS resources configured for interference measurements.

As one embodiment, the second RS resource set comprises at least one of a CSI-IM (Channel State Information-Interference Measurement) resource or an NZP CSI-RS resource for interference measurements.

As one embodiment, the second RS resource set comprises at least a CSI-IM (Channel State Information-Interference Measurement) resource in the CSI-IM resource or an NZP CSI-RS resource for interference measurements.

As one embodiment, the second RS resource set comprises a CSI-IM resource.

As one embodiment, the second RS resource set comprises a CSI-IM resource and an NZP CSI-RS resource for interference measurements.

Typically, CSI-IM is a zero-power reference signal.

As one embodiment, the first information block comprises two resource configurations, and the two resource configurations are respectively used for configuring the first RS resource set and the second RS resource set.

As one sub-embodiment of the above embodiment, the two resource configurations are respectively two CSI resource configurations.

As one sub-embodiment of the above embodiment, the two resource configurations are two IE CSI-ResourceConfigs.

As one sub-embodiment of the above embodiment, the first information block comprises a resourcesForChannelMeasurement field and a csi-IM-ResourcesForInterference field, and the resourcesForChannelMeasurement field and the csi-IM-ResourcesForInterference field included in the first information block respectively indicate the two resource configurations.

As one embodiment, the first information block comprises a csi-IM-ResourcesForInterference field, and the csi-IM-ResourcesForInterference field included in the first information block is used for indicating the second RS resource set.

As one embodiment, the first information block comprises three resource configurations, and the three resource configurations are respectively used for configuring CSI-IM resources in the first RS resource set and the second RS resource set, and an NZP CSI-RS resource configured for interference measurements in the second RS resource set.

As one sub-embodiment of the above embodiment, the three resource configurations are respectively three CSI resource configurations.

As one sub-embodiment of the above embodiment, the three resource configurations are respectively three IE CSI-ResourceConfigs.

As one sub-embodiment of the above embodiment, the first information block comprises a resourcesForChannelMeasurement field, a csi-IM-ResourcesForInterference field, and an nzp-CSI-RS-ResourcesForInterference field, and the resourcesForChannelMeasurement field, the csi-IM-ResourcesForInterference field, and the nzp-CSI-RS-ResourcesForInterference field included in the first information block respectively indicate the three resource configurations.

As one sub-embodiment of the above embodiment, the first information block comprises a csi-IM-ResourcesForInterference field and an nzp-CSI-RS-ResourcesForInterference field, and the csi-IM-ResourcesForInterference field and the nzp-CSI-RS-ResourcesForInterference field included in the first information block are respectively used for indicating the second RS resource set.

As one embodiment, specific definitions of IE CSI-ReportConfig, resourcesForChannelMeasurement, csi-IM-ResourcesForInterference, nzp-CSI-RS-ResourcesForInterference, and IE CSI-ResourceConfi refer to Section 6.3.2 of 3GPP TS 38.331.

As one embodiment, configuration information of one RS resource is indicated by one or more IEs.

As one embodiment, configuration information of one RS resource comprises an identifier of the one RS resource, and at least one of a period, a time offset, an occupied time domain resource, an occupied frequency domain resource, an occupied code domain resource, a cyclic shift, an OCC (Orthogonal Cover Code), an occupied antenna port group, a sending sequence, and a TCI (Transmission Configuration Indicator) state.

As one embodiment, the first information block comprises a resourcesForChannelMeasurement field, and the resourcesForChannelMeasurement field included in the first information block is used for indicating the first RS resource set.

As one embodiment, specific definitions of IE CSI-ReportConfig, resourcesForChannelMeasurement, and IE CSI-ResourceConfig refer to Section 6.3.2 of 3GPP TS 38.331.

As one embodiment, the first information block also indicates a report type of the first channel information.

As one embodiment, the first information block comprises a reportConfigType (report configuration type) field; and the reportConfigType (report configuration type) field in the first information block indicates a report type of the first channel information.

As one embodiment, the report type comprises one or more of periodic, semi-persistent on a PUSCH, semi-persistent on a PUCCH, or aperiodic.

As one embodiment, the report type comprises one or more of periodic, semi-persistent, or aperiodic.

As one embodiment, at least one RS resource in the first RS resource set is used for channel measurements of the first channel information.

As one embodiment, the first RS resource set is used for channel measurements of the first channel information.

As one embodiment, the first RS resource set comprises one RS resource.

As one embodiment, the first RS resource set comprises a plurality of RS resources.

As one embodiment, the first RS resource set comprises one or more CSI-RS (Channel State Information-Reference Signal) resources.

As one embodiment, the first RS resource set comprises one or two of a CSI-RS resource or an SS/PBCH (Synchronization Signal/Physical Broadcast CHannel) block resource.

As one embodiment, any RS resource in the first RS resource set is a CSI-RS resource or an SS/PBCH block resource.

As one embodiment, the first RS resource set comprises one or two of a CSI-RS resource or an SSB resource.

As one embodiment, any RS resource in the first RS resource set is a CSI-RS resource or an SSB resource.

As one embodiment, any RS resource in the first RS resource set is a CSI-RS resource.

As one embodiment, the SSB refers to a Synchronization Signal Block.

As one embodiment, the SSB refers to a Synchronization Signal/Physical Broadcast Channel Block.

As one embodiment, the first information block comprises a higher-layer parameter *timeRestrictionForChannelMeasurements,* and the higher-layer parameter *timeRestrictionForChannelMeasurements* in the first information block is set as *"configured".*

As one embodiment, the first information block comprises a higher-layer parameter *timeRestrictionForChannelMeasurements,* and the higher-layer parameter *timeRestrictionForChannelMeasurements* in the first information block is set as *"notConfigured".*

As one embodiment, the first information block is used for configuring one aperiodic CSI report, and the first channel information is the one aperiodic CSI report configured by the first information block.

As one embodiment, the first information block is used for configuring one periodic or semi-persistent CSI report, and the first channel information is a reporting instance of the periodic or semi-persistent SI report configured by the first information block.

As one embodiment, the first information block is used for configuring one periodic CSI report, and the first channel information is a reporting instance of the periodic CSI report configured by the first information block.

As one embodiment, the first information block is used for configuring one semi-persistent CSI report, and the first channel information is a reporting instance of the semi-persistent CSI report configured by the first information block.

As one embodiment, the first channel information is transmitted on a physical channel.

As one embodiment, the first channel information is transmitted on a PUSCH (Physical Uplink Shared Channel).

As one embodiment, the first channel information is transmitted on a PUCCH (Physical Uplink Control Channel).

As one embodiment, the first channel information is periodic or semi-persistent.

As one embodiment, the first channel information is semi-persistent, and the first channel information is activated by one MAC CE.

As one sub-embodiment of the above embodiment, a name of the MAC CE activating the first channel information comprises SP CSI reporting on PUCCH Activation MAC CE.

As one sub-embodiment of the above embodiment, a name of the MAC CE activating the first channel information comprises reporting on PUCCH Activation MAC CE.

As one embodiment, the first channel information is aperiodic, and the first channel information is triggered by one piece of DCI (Downlink Control Information).

As one embodiment, the first channel information is aperiodic, and the first channel information is triggered by one piece of DCI (Downlink Control Information); and the one piece of DCI comprises a CSI request field, the CSI request field of the one piece of DCI is used for indicating one trigger state, and the one trigger state is used for indicating a report configuration of the first channel information.

As one sub-embodiment of the above embodiment, the one trigger state indicates a report configuration identifier of the first channel information.

As one embodiment, the first information block further indicates a report quantity included in the first channel information.

As one embodiment, the first information block comprises a reportQuantity field, and the reportQuantity field in the first information block indicates a report quantity included in a report configuration of the first channel information.

As one embodiment, the first information block comprises a reportQuantity field, and the reportQuantity field in the first information block indicates a report quantity included in the first channel information.

As one embodiment, a report quantity included in the first channel information comprises a first type.

As one embodiment, a report quantity included in the first channel information comprises a first type or a PMI (Precoding Matrix Indicator).

As one embodiment, a report quantity included in the first channel information comprises a first type or a PMI (Precoding Matrix Indicator).

As one embodiment, a report quantity in a report configuration of the first channel information comprises at least one of a first type, a PMI (Precoding Matrix Indicator), a CQI (Channel Quality Indicator), a CRI (CSI-RS Resource Indicator), an SS/PBCH Block Resource Indicator (SSBRI), a Layer Indicator (LI), an RI (Rank Indicator), an L1-RSRP (Layer 1 Reference Signal Received Power), or an L1-SINR (Layer 1 signal-to-noise and interference ratio).

As one embodiment, it comprises:
sending a first CQI,
wherein a report quantity in a report configuration of the first channel information comprises a CQI; and a measurement for at least one RS resource in the first RS resource set is used for generating first input channel information, the first input channel information is used for generating the first CQI, and the first input channel information is available only to the first node.

As one embodiment, it comprises:
sending a first CQI,
wherein a report quantity in a report configuration of the first channel information comprises a CQI; the first channel information is used for generating the first CQI.

As one embodiment, the first type is different from any report quantity amongst a PMI, a CQI, a CRI, an SS/PBCH block resource indicator, a layer indicator, an RI, an L1-RSRP, or an L1-SINR.

As one embodiment, when a report quantity included in the first channel information comprises a PMI, the first channel information is used for indicating a codebook-based precoding matrix.

As one embodiment, when a report quantity included in the first channel information comprises a first type, the first channel information is used for determining a non-codebook-based precoding matrix.

Typically, the PMI is codebook-based.

As one embodiment, the first type is non-codebook-based.

As one embodiment, the first channel information comprises non-codebook-based channel information.

As one embodiment, the first channel information is non-codebook-based channel information.

As one embodiment, the meaning of the sentence "the PMI is codebook-based" comprises: the PMI is selected from a candidate codebook set.

As one embodiment, the meaning of the sentence "the PMI is codebook-based" comprises: the PMI indicates at least one codebook index.

As one embodiment, the meaning of the sentence "the PMI is codebook-based" comprises: the PMI indicates a codebook-based precoding matrix.

As one embodiment, the meaning of the sentence "the first type is non-codebook-based" comprises: the first type indicates non-codebook-based channel information.

As one embodiment, the meaning of the sentence "the first type is non-codebook-based" comprises: the first type indicates channel information generated based on artificial intelligence or machine learning.

As one embodiment, the meaning of the sentence "the first type is non-codebook-based" comprises: the first type indicates channel information generated based on the first code.

As one embodiment, channel information generated based on artificial intelligence or machine learning is non-codebook-based.

As one embodiment, the meaning of "the first channel information comprises non-codebook-based channel information" comprises: channel information reconstructed by a sender of the first information block according to the first channel information is unavailable to the sender of the first channel information.

As one embodiment, the meaning of "the first channel information comprises non-codebook-based channel information" comprises: the first channel information does not comprise a codebook index.

As one embodiment, the meaning of "the first channel information comprises non-codebook-based channel information" comprises: the first channel information is not a PMI.

As one embodiment, the meaning of "the first channel information comprises non-codebook-based channel information" comprises: the first channel information is used for precoding, and the first channel information does not comprise a codebook index.

As one embodiment, the meaning of "the first channel information comprises non-codebook-based channel information" comprises: the first channel information is used for precoding, and the first channel information is not PMI.

As one embodiment, the non-codebook-based channel information refers to information that cannot be indicated by a PMI or is not selected from a candidate codebook set.

As one embodiment, the non-codebook-based channel information is used for precoding.

As one embodiment, the non-codebook-based channel information is used for determining a channel parameter matrix.

As one embodiment, the non-codebook-based channel information is used for determining a phase, or an amplitude, or a coefficient between at least two antenna ports.

As one embodiment, the non-codebook-based channel information is used for determining at least one eigenvector.

As one embodiment, the non-codebook-based channel information is used for determining at least one eigenvalue.

As one embodiment, the non-codebook-based channel information is used for determining at least one precoding matrix.

As one embodiment, the non-codebook-based channel information is used for determining at least one channel parameter matrix.

As one embodiment, a measurement for the first RS resource set is used for generating the first channel information.

As one embodiment, the meaning of "a measurement for at least one RS resource in the first RS resource set is used for generating an input of the first code" refers to: a measurement for part or all of RS resources in the first RS resource set is used for generating the input of the first code.

As one embodiment, the meaning of " a measurement for at least one RS resource in the first RS resource set is used for generating an input of the first code" refers to: a measurement for part of RS resources in the first RS resource set is used for generating the input of the first code.

As one embodiment, the meaning of " a measurement for at least one RS resource in the first RS resource set is used for generating an input of the first code" refers to: a measurement for each RS resource in the first RS resource set is used for generating the input of the first code.

As one embodiment, the meaning of " a measurement for at least one RS resource in the first RS resource set is used for generating an input of the first code" refers to: a measurement for one RS resource in the first RS resource set is used for generating the input of the first code.

As one embodiment, the meaning of " a measurement for at least one RS resource in the first RS resource set is used for generating an input of the first code" refers to: the first RS resource set comprises only one RS resource, and a measurement for the first RS resource set is used for generating the input of the first code.

As one embodiment, a measurement for the first RS resource set is used for generating first input channel information, and an output after inputting the first input channel information into the first code comprises the first channel information.

As one embodiment, a measurement for the first RS resource set is used for generating first input channel information, and an output after inputting the first input channel information into the first code is used for generating the first channel information.

As one embodiment, a measurement for at least one RS resource in the first RS resource set is used for generating first input channel information, and an output after inputting the first input channel information into the first code comprises the first channel information.

As one embodiment, a measurement for at least one RS resource in the first RS resource set is used for generating first input channel information, and an output after inputting the first input channel information into the first code is used for generating the first channel information.

As one embodiment, a measurement for one RS resource in the first RS resource set is used for generating first input channel information, and an output after inputting the first input channel information into the first code comprises the first channel information.

As one embodiment, a measurement for one RS resource in the first RS resource set is used for generating first input channel information, and an output after inputting the first input channel information into the first code is used for generating the first channel information.

As one embodiment, the first information block and the second information block belong to one identical RRC IE.

As one embodiment, the first information block and the second information block both belong to one IE with a name including CSI-ReportConfig.

As one embodiment, the second information block comprises a reportQuantity field.

As one embodiment, the second information block comprises a reportQuantity field, and the reportQuantity field in the first information block indicates a report quantity included in the first channel information.

As one embodiment, the second information block comprises a reportQuantity field, and the reportQuantity field in the first information block indicates a report quantity included in a report configuration of the first channel information.

As one embodiment, a name of the second information block does not comprise reportQuantity.

As one embodiment, the second information block does not comprise a reportQuantity field.

As one embodiment, the second information block comprises a field other than a reportQuantity field.

As one embodiment, the second information block comprises one field other than a reportQuantity field in IE CSI-ReportConfig.

As one embodiment, the second information block comprises one field other than a reportQuantity field in IE CSI-ReportConfig.

As one embodiment, the first information block and the second information block respectively comprise different RRC IEs.

As one embodiment, the first information block and the second information block respectively belong to different RRC IEs.

As one embodiment, the at least one identifier comprises only one identifier.

As one embodiment, the at least one identifier is one identifier group.

As one embodiment, one identifier group comprises one or more identifiers.

As one embodiment, one identifier group comprises a plurality of identifiers.

As one embodiment, one identifier group comprises two identifiers.

As one embodiment, the at least one identifier comprises two identifiers indicating different types of information.

As one embodiment, the at least one identifier comprises a plurality of identifiers indicating different types of information.

As one embodiment, the at least one identifier comprises two identifiers indicating the same type of information.

As one embodiment, the at least one identifier comprises a plurality of identifiers indicating the same type of information.

As one embodiment, one identifier in the at least one identifier is one non-negative integer.

As one embodiment, one identifier in the at least one identifier is one positive integer.

As one embodiment, one identifier in the at least one identifier is one index.

As one embodiment, one identifier in the at least one identifier is one bit.

As one embodiment, one identifier in the at least one identifier is one bit sequence.

As one embodiment, the at least one identifier is used for determining a parameter group used by the first code from the J parameter groups.

As one embodiment, the at least one identifier is used for determining a parameter group used by the first code from part of parameter groups amongst the J parameter groups.

As one embodiment, the at least one identifier comprises one identifier in N identifiers, N is a positive integer greater than 1, any identifier in the N identifiers is used for determining one parameter group amongst the J parameter groups, and in the N identifiers there are two identifiers respectively used for determining two parameter groups amongst the J parameter groups.

As one embodiment, the at least one identifier is one identifier group in N identifier groups, N is a positive integer greater than 1, any identifier group in the N identifier groups is used for determining one parameter group amongst the J parameter groups, and in the N identifier groups there are two identifier groups respectively used for determining two parameter groups amongst the J parameter groups.

As one embodiment, any identifier group in the N identifier groups comprises one identifier in the N identifiers, and in the N identifier groups there are two identifier groups respectively comprising different identifiers in the N identifiers.

As one embodiment, the N identifiers are different from each other.

As one embodiment, the N identifier groups are different from each other.

As one embodiment, there are two identifier groups comprising one identical identifier in the N identifier groups.

As one embodiment, in the N identifier groups, there are two identifier groups comprising one identical identifier in the N identifiers.

As one embodiment, the at least one identifier is used for identifying a parameter group used by the first code.

As one embodiment, the at least one identifier is used for indicating a parameter group used by the first code.

As one embodiment, the at least one identifier directly indicates a parameter group used by the first code.

As one embodiment, the at least one identifier indirectly indicates a parameter group used by the first code.

As one embodiment, the at least one identifier explicitly indicates a parameter group used by the first code.

As one embodiment, the at least one identifier implicitly indicates a parameter group used by the first code.

### Embodiment 2

Embodiment 2 illustrates a schematic diagram of a network architecture according to one embodiment of the present application, as shown in FIG. 2. FIG. 2 illustrates an architecture of 5G NR (New Radio), LTE (Long-Term Evolution), and LTE-A (Long-Term Evolution Advanced) systems. The 5G NR or LTE network architecture 200 may be referred to as 5GS (5G System)/EPS (Evolved Packet System) or some other suitable terminologies. The EPS 200 may comprise one piece of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet switching services, but those skilled in the art will readily appreciate that various concepts presented throughout the present application may be extended to networks providing circuit switching services or other cellular networks. The NG-RAN comprises an NR node B (gNB) 203 and other gNB204. The gNB203 provides user and control plane protocol termination toward the UE201. The gNB203 may be connected to the other gNB204 via an Xn interface (e.g., backhaul). The gNB203 may also be referred to as a base station, a base transceiver station, a radio base station, a radio transceiver, a transceiver function, a basic service set (BSS), an extended service set (ESS), a TRP, or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 by an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes signaling between the UE201 and the EPC/5G-CN 210. Generally, the MME/AMF/UPF211 provides bearer and connection management. All user IP (Internet Protocol) packets are transmitted through the S-GW212, wherein the S-GW212 itself is connected to the P-GW213. The P-GW213 provides UE IP address allocation and other functions. The P-GW213 is connected to the Internet service 230. The Internet service 230 comprises operator-corresponding Internet protocol services, which may specifically comprise Internet, intranet, IMS (IP Multimedia Subsystem), and packet switching streaming services.

As one embodiment, the UE201 corresponds to the first node in the present application, and the gNB203 corresponds to the second node in the present application.

As one embodiment, the UE201 supports generating a report using AI (Artificial Intelligence) or machine learning.

As one embodiment, the UE201 supports generating a trained model using training data or generating partial parameters in a trained model using data after training.

As one embodiment, the UE201 supports determining, by training, at least partial parameters of CNNs (Conventional Neural Networks) used for CSI reconstruction.

As one embodiment, the gNB203 supports generating a report using AI (Artificial Intelligence) or machine learning.

As one embodiment, the gNB203 supports generating a trained model using training data or generating partial parameters in a trained model using data after training.

As one embodiment, the gNB203 supports determining, by training, at least partial parameters of CNNs (Conventional Neural Network) used for CSI reconstruction.

As one embodiment, the UE201 is a terminal that supports MIMO.

As one embodiment, the gNB203 supports MIMO-based transmission.

As one embodiment, the UE201 supports compressing CSI using AI or deep learning.

As one embodiment, the gNB203 supports depressing CSI using AI or deep learning.

As one embodiment, the gNB203 is a MacroCellular base station.

As one embodiment, the gNB203 is a micro cell base station.

As one embodiment, the gNB203 is a PicoCell base station.

As one embodiment, the gNB203 is a home base station (Femtocell).

As one embodiment, the gNB203 is a base station device that supports a large latency difference.

As one embodiment, the gNB203 is one flying platform device.

As one embodiment, the gNB203 is a satellite device.

As one embodiment, the first node and the second node in the present application are the UE201 and the gNB203, respectively.

### Embodiment 3

Embodiment 3 shows a schematic diagram of an embodiment of a wireless protocol architecture for one user plane and one control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first node device (UE or an RSU in V2X, a vehicle-mounted device, or a vehicle-mounted communication module) and a second node device (a gNB, UE, or an RSU in V2X, a vehicle-mounted device, or a vehicle-mounted communication module), or between two pieces of UE, using three layers: Layer 1, Layer 2, and Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301, and is responsible for links between a first node device and a second node device and between two pieces of UE through the PHY301. The L2 layer 305 comprises an MAC (Medium Access Control) sublayer 302, an RLC (Radio Link Control) sublayer 303, and a PDCP (Packet Data Convergence Protocol) sublayer 304, and these sublayers terminate at the second node device. The PDCP sublayer 304 provides data encryption and integrity protection, and the PDCP sublayer 304 also provides cross-cell mobility support of the first node device to the second node device. The RLC sublayer 303 provides data packet segmentation and reassembly, and achieves retransmission of lost data packets through an ARQ, and the RLC sublayer 303 also provides duplicate data packet detection and protocol error detection. The MAC sublayer 302 provides mapping between logical and transport channels and multiplexing of the logical channels. The MAC sublayer 302 is also responsible for allocating various radio resources (e.g., resource blocks) in one cell between the first node devices. The MAC sublayer 302 is also responsible for HARQ operations. An RRC (Radio Resource Control) sublayer 306 in a Layer 3 (L3 layer) in the control plane 300 is responsible for obtaining radio resources (i.e., radio bearers) and configuring a lower layer using RRC signaling between the second node device and the first node device. The radio protocol architecture for the user plane 350 comprises Layer 1 (L1 layer) and Layer 2 (L2 layer). The radio protocol architecture for the first node device and the second node device in the user plane 350 is substantially the same as that for the corresponding layers and sublayers in the control plane 300 as for a physical layer 351, a PDCP sublayer 354 in the L2 layer 355, an RLC sublayer 353 in the L2 layer 355, and an MAC sublayer 352 in the L2 layer 355, but the PDCP sublayer 354 also provides header compression for upper-layer data packets to reduce the radio transmission overhead. The L2 layer 355 in the user plane 350 further comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first node device may have several upper layers above the L2 layer 355, comprising a network layer (e.g., an IP layer) terminating at the P-GW on a network side and an application layer terminating at the other end (e.g., remote UE, a server, etc.) of connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the first information block in the present application is generated in the RRC sublayer 306.

As one embodiment, the second information block in the present application is generated in the RRC sublayer 306.

As one embodiment, the third information block in the present application is generated in the RRC sublayer 306.

As one embodiment, the first channel information in the present application is generated in the PHY301 or the PHY351.

### Embodiment 4

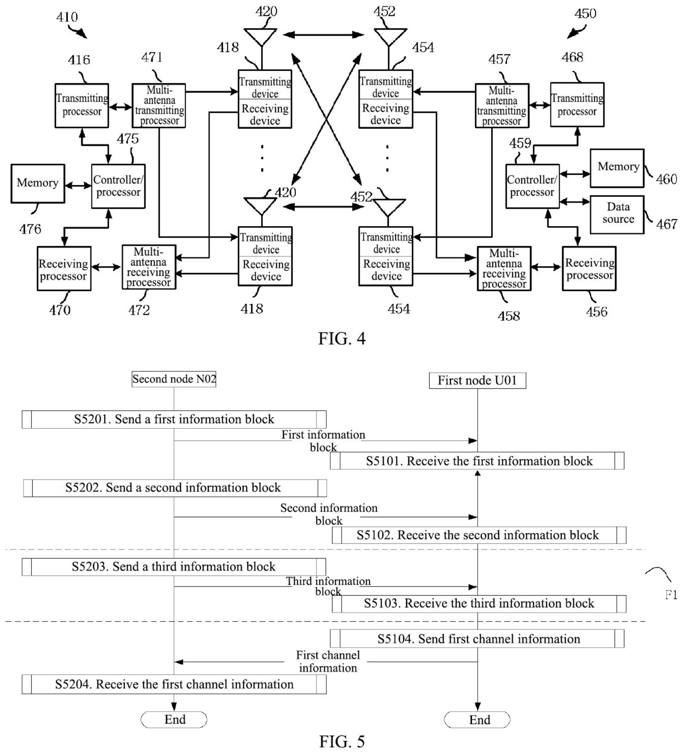

Embodiment 4 shows a schematic diagram of a hardware module of a communication node according to one embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, an upper-layer data packet from a core network is provided to the controller/processor 475. The controller/processor 475 implements the functionality of an L2 layer. In transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for an L1 layer (i.e., a physical layer). The transmitting processor 416 implements channel coding and interleaving to facilitate forward error correction (FEC) at the second communication device 410, as well as mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding comprising codebook-based precoding and non-codebook-based precoding, and beamforming processing on the coded and modulated symbols to generate one or more spatial streams. The transmitting processor 416 then maps each spatial stream to a subcarrier, multiplexes it with a reference signal (e.g., a pilot) in a time domain and/or frequency domain, and then uses an inverse fast Fourier transform (IFFT) to generate a physical channel carrying a time domain multi-carrier symbol stream. The multi-antenna transmitting processor 471 then performs sending analog precoding/beamforming operations on the time domain multi-carrier symbol stream. Each transmitting device 418 converts a baseband multi-carrier symbol stream provided by the multi-antenna transmitting processor 471 into a radio frequency stream, and then provides it to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, and converts a radio frequency stream into a baseband multi-carrier symbol stream to be provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a Fast Fourier Transform (FFT) to convert the baseband multi-carrier symbol stream subjected to the receiving analog precoding/beamforming operations from the time domain to the frequency domain. In the frequency domain, the physical layer data signal and the reference signal are demultiplexed by the receiving processor 456, wherein the reference signal will be used for channel estimation, and any spatial stream destined for the first communication device 450 is recovered from the data signal after multi-antenna detection in the multi-antenna receiving processor 458. Symbols on each spatial stream are demodulated and recovered in the receiving processor 456, and soft decisions are generated. The receiving processor 456 then performs deinterleaving and channel decoding on the soft decisions to recover the upper-layer data and control signals transmitted by the second communication device 410 on the physical channel. The upper-layer data and control signals are then provided to the controller/processor 459. The controller/processor 459 implements functions of the L2 layer. The controller/processor 459 may be associated with the memory 460 storing a program code and data. The memory 460 may be referred to as a computer-readable medium. In the transmission from the second communication device 410 to the second node 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to the L3 for L3 processing.

In the transmission from the first communication device 450 to the second communication device 410, at the first communication device 450, the upper-layer data packets are provided to the controller/processor 459 using the data source 467. The data source 467 represents all protocol layers above the L2 layer. Similar to the sending function at the second communication device 410 as described in the transmission from the second communication device 410 to the first communication device 450, the controller/processor 459 implements header compression, encryption, packet segmentation and reordering, and multiplexing between logical and transport channels based on radio resource allocation, and implements functions of the L2 layer for the user plane and the control plane. The controller/processor 459 is also responsible for retransmission of lost packets and signaling to the second communication device 410. The transmitting processor 468 executes channel coding, interleaving, and modulation mapping, the multi-antenna transmitting processor 457 performs digital multi-antenna spatial precoding, comprising codebook-based precoding and non-codebook-based precoding, and beamforming processing, the transmitting processor 468 then modulates the generated spatial stream into a multi-carrier/single-carrier symbol stream, and after analog precoding/beamforming operations in the multi-antenna transmitting processor 457, the multi-carrier/single-carrier symbol stream is provided to different antennas 452 via the transmitting device 454. Each transmitting device 454 first converts the baseband symbol stream provided by the multi-antenna transmitting processor 457 into the radio frequency stream, which is then provided to different antennas 452.

In the transmission from the first communication device 450 to the second communication device 410, the function at the second communication device 410 is similar to the receiving function at the first communication device 450 as described in the transmission from the second communication device 410 to the first communication device 450. Each receiving device 418 receives the radio frequency signal through its corresponding antenna 420, converts the received radio frequency signal into the baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 storing a program code and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packet from the controller/processor 475 can be provided to the core network.

As one embodiment, the first communication device 450 apparatus comprises: at least one processor and at least one memory, wherein the at least one memory comprises a computer program code; the at least one memory and the computer program code are configured to be used together with the at least one processor, and the first communication device 450 apparatus at least: receives a first information block, the first information block being used for indicating a first RS resource set, and the first RS resource set comprising one or more RS resources; receives a second information block, the second information block indicating at least one identifier; and sends first channel information, wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

As one embodiment, the first communication device 450 comprises: a memory storing a computer-readable instruction program, the computer-readable instruction program generates actions when executed by at least one processor, and the actions comprise: receiving a first information block, the first information block being used for indicating a first RS resource set, and the first RS resource set comprising one or more RS resources; receiving a second information block, the second information block indicating at least one identifier; and sending first channel information, wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

As one embodiment, the second communication device 410 apparatus comprises: at least one processor and at least one memory, wherein the at least one memory comprises a computer program code; and the at least one memory and the computer program code are configured to be used together with the at least one processor. The second communication device 410 apparatus at least: sends a first information block, the first information block being used for indicating a first RS resource set, and the first RS resource set comprising one or more RS resources; sends a second information block, the second information block indicating at least one identifier; and receives first channel information, wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

As one embodiment, the second communication device 410 apparatus comprises: a memory storing a computer-readable instruction program, the computer-readable instruction program generates actions when executed by at least one processor, and the actions comprise: sending a first information block, the first information block being used for indicating a first RS resource set, and the first RS resource set comprising one or more RS resources; sending a second information block, the second information block indicating at least one identifier; and receiving first channel information, wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

As one embodiment, the first communication device 450 corresponds to a first node in the present application.

As one embodiment, the second communication device 410 corresponds to a second node in the present application.

As one embodiment, the first communication device 450 is one piece of UE, and the second communication device 410 is one base station.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the second information block in the present application; and at least one of {the antenna 420, the transmitting device 418, the transmitting processor 416, the multi-antenna transmitting processor 471, the controller/processor 475, and the memory 476} is used for sending the second information block in the present application.

As one embodiment, at least one of {the antenna 452, the receiving device 454, the receiving processor 456, the multi-antenna receiving processor 458, the controller/processor 459, the memory 460, and the data source 467} is used for receiving the third information block in the present application; and at least one of {the antenna 420, the transmitting device 418, the transmitting processor 416, the multi-antenna transmitting processor 471, the controller/processor 475, and the memory 476} is used for sending the third information block in the present application.

As one embodiment, at least one of {the antenna 452, the transmitting device 454, the transmitting processor 468, the multi-antenna transmitting processor 457, the controller/processor 459, and the memory 460} is used for sending the first channel information in the present application; and at least one of {the antenna 420, the receiving device 418, the receiving processor 470, the multi-antenna receiving processor 472, the controller/processor 475, and the memory 476} is used for receiving the first channel information in the present application.

### Embodiment 5

Embodiment 5 illustrates a flowchart of wireless transmission according to one embodiment of the present application, as shown in FIG. 5. In FIG. 5, a first node U01 and a second node N02 are respectively two communication nodes transmitted through an air interface. In the figure, a step in block F1 is optional.

For **the first node U01,** a first information block is received in step S5101; a second information block is received in step S5102; a third information block is received in step S5103; and first channel information is sent in step S5104;
for **the second node N02,** a first information block is sent in step S5201; a second information block is sent in step S5202; a third information block is sent in step S5203; first channel information is received in step S5204;
in Embodiment 5, the first information block is used for indicating a first RS resource set, and the first RS resource set comprises one or more RS resources; the second information block indicates at least one identifier; a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

As one embodiment, the first information block and the second information block are received simultaneously.

As one embodiment, the first information block and the second information block are not received simultaneously.

As one embodiment, the first information block, the second information block, and the third information block are received simultaneously.

As one embodiment, the first information block, the second information block, and the third information block are not received simultaneously.

As one embodiment, the at least one identifier comprises one identifier in N identifiers, the third information block configures or indicates part or all of identifiers in the N identifiers, and N is a positive integer greater than 1; and the first information block and the second information block belong to one identical RRC IE, and the third information block and the second information block belong to different RRC IEs.

As one embodiment, the at least one identifier is used for determining a parameter group used by the first decode, the parameter group used by the first decode being one parameter group amongst P parameter groups, and P being a positive integer.

### Embodiments 6A-6E

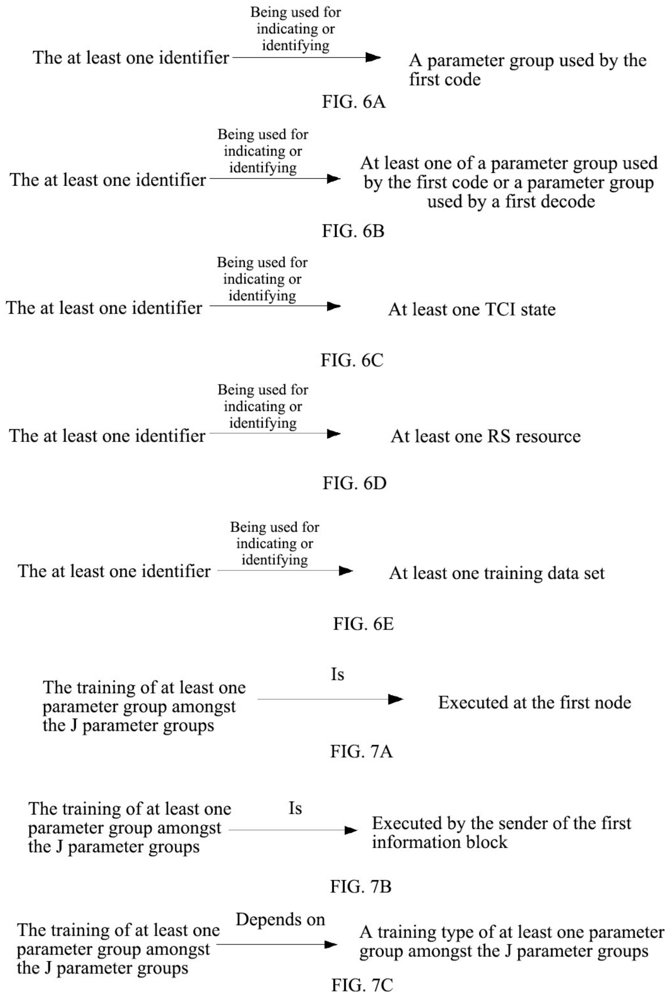

Embodiments 6A-6E respectively illustrate schematic diagrams of at least one identifier according to one embodiment of the present application, as shown in FIGS. 6A-6E.

In Embodiment 6A, the at least one identifier is used for indicating or identifying a parameter group used by the first code.

As one embodiment, the at least one identifier comprises a plurality of identifiers, and one identifier in the at least one identifier is used for indicating or identifying a parameter group used by the first code.

As one embodiment, the at least one identifier comprises a plurality of identifiers, and part of identifiers in the at least one identifier are used for indicating or identifying a parameter group used by the first code.

As one embodiment, the at least one identifier is used for indicating or identifying a parameter group used by the first code from J parameter groups, the parameter group used by the first code is one parameter group amongst the J parameter groups, and J is a positive integer greater than 1.

As one embodiment, the at least one identifier is an identifier of a parameter group used by the first code in J parameter groups, the parameter group used by the first code is one parameter group amongst the J parameter groups, and J is a positive integer greater than 1.

As one embodiment, the at least one identifier is used for indicating or identifying at least one parameter group amongst J parameter groups, the parameter group used by the first code is one parameter group amongst the J parameter groups, and J is a positive integer greater than 1.

As one embodiment, the at least one identifier is used for indicating or identifying a first parameter set, the parameter group used by the first code is one parameter group amongst the J parameter groups, and J is a positive integer greater than 1.

As one sub-embodiment of the above embodiment, the first parameter set comprises one or more parameter groups amongst the J parameter groups.

As one sub-embodiment of the above embodiment, the first parameter set comprises J parameter groups.

As one sub-embodiment of the above embodiment, the first parameter set comprises a plurality of parameter groups amongst the J parameter groups.

As one embodiment, the at least one identifier comprises one identifier in IE CSI-reportconfig.

As one embodiment, the at least one identifier comprises at least one identifier in IE CSI-reportconfig.

As one embodiment, the at least one identifier is used for indicating or identifying one model.

As one embodiment, the at least one identifier is used for indicating or identifying at least one model.

As one embodiment, the at least one identifier comprises an identifier of at least one model.

As one embodiment, the at least one identifier is used for indicating or identifying one model set.

As one embodiment, one model set comprises one or more models.

As one embodiment, one model set comprises a plurality of models.

As one embodiment, the one model indicated or identified by the at least one identifier is used for CSI generation.

As one embodiment, the one model indicated or identified by the at least one identifier is one CSI generation model.

As one embodiment, the at least one model indicated or identified by the at least one identifier is used for CSI generation.

As one embodiment, the at least one model indicated or identified by the at least one identifier comprises at least one CSI generation model.

As one embodiment, the one model set indicated or identified by the at least one identifier comprises one or more models.

As one embodiment, the one model set indicated or identified by the at least one identifier comprises a plurality of models.

As one embodiment, the one model set indicated or identified by the at least one identifier is used for CSI generation.

As one embodiment, the one model set indicated or identified by the at least one identifier comprises one or more CSI generation models.

As one embodiment, the one model set indicated or identified by the at least one identifier comprises a plurality of CSI generation models.

As one embodiment, the at least one identifier is used for indicating or identifying one model, and the one model indicated or identified by the at least one identifier is described by a parameter group used by the first code.

As one embodiment, the at least one identifier is used for indicating or identifying one model, and a parameter group used by the first code comprises the one model indicated or identified by the at least one identifier.

As one embodiment, the at least one identifier is used for indicating or identifying one model, and a parameter group used by the first code is the one model indicated or identified by the at least one identifier.

As one embodiment, the at least one identifier is used for indicating or identifying at least one model, and one model in the at least one model indicated or identified by the at least one identifier is described by a parameter group used by the first code.

As one embodiment, the at least one identifier is used for indicating or identifying at least one model, and a parameter group used by the first code comprises one model in the at least one model indicated or identified by the at least one identifier.

As one embodiment, the at least one identifier is used for indicating or identifying at least one model, and a parameter group used by the first code is one model in the at least one model indicated or identified by the at least one identifier.

As one embodiment, the at least one identifier is used for indicating or identifying one model set, and one model in the one model set indicated or identified by the at least one identifier is described by a parameter group used by the first code.

As one embodiment, the at least one identifier is used for indicating or identifying one model set, and a parameter group used by the first code comprises one model in the one model set indicated or identified by the at least one identifier.

As one embodiment, the at least one identifier is used for indicating or identifying one model set, and a parameter group used by the first code is one model in the one model set indicated or identified by the at least one identifier.

In Embodiment 6B, the at least one identifier is used for indicating or identifying at least one of a parameter group used by the first code or a parameter group used by a first decode, and the first channel information is used by a sender of the first information block for an input of the first decode or the first channel information is used by a sender of the first information block for generating an input of the first decode.

As one embodiment, the at least one identifier comprises a plurality of identifiers, and one identifier in the plurality of identifiers is used for indicating or identifying at least one of a parameter group used by the first code or a parameter group used by a first decode.

As one embodiment, the at least one identifier comprises a plurality of identifiers, and part of identifiers in the plurality of identifiers are used for indicating or identifying at least one of a parameter group used by the first code or a parameter group used by a first decode.

As one embodiment, the meaning of "the at least one identifier is used for indicating or identifying at least one of a parameter group used by the first code or a parameter group used by a first decode" comprises: the at least one identifier is used for indicating or identifying at least one of a parameter group used by the first decode.

As one embodiment, the meaning of "the at least one identifier is used for indicating or identifying at least one of a parameter group used by the first code or a parameter group used by a first decode" comprises: the at least one identifier is used for indicating or identifying the parameter group used by the first code and the parameter group used by the first decode.

As one embodiment, the meaning of "the at least one identifier is used for indicating or identifying at least one of a parameter group used by the first code or a parameter group used by a first decode" comprises: the at least one identifier comprises two identifiers, and the two identifiers are respectively used for indicating or identifying the parameter group used by the first code and the parameter group used by the first decode.

As one embodiment, the at least one identifier is used for indicating or identifying a parameter group used by the first decode from P parameter groups, the parameter group used by the first decode is one parameter group amongst the P parameter groups, and P is a positive integer.

As one embodiment, the at least one identifier is an identifier of a parameter group used by the first decode in P parameter groups, the parameter group used by the first decode is one parameter group amongst the P parameter groups, and P is a positive integer.

As one embodiment, the at least one identifier is used for indicating or identifying at least one parameter group amongst P parameter groups, the parameter group used by the first decode is one parameter group amongst the P parameter groups, and P is a positive integer.

As one embodiment, the at least one identifier is used for indicating or identifying a first parameter set, the parameter group used by the first decode is one parameter group amongst the P parameter groups, and P is a positive integer.

As one sub-embodiment of the above embodiment, the first parameter set comprises one or more parameter groups amongst P parameter groups.

As one sub-embodiment of the above embodiment, the first parameter set comprises P parameter groups.

As one sub-embodiment of the above embodiment, the first parameter set comprises a plurality of parameter groups amongst P parameter groups.

As one embodiment, the one model indicated or identified by the at least one identifier is used for CSI reconstruction.

As one embodiment, the one model indicated or identified by the at least one identifier is one CSI reconstruction model.

As one embodiment, the at least one model indicated or identified by the at least one identifier is used for CSI reconstruction.

As one embodiment, the at least one model indicated or identified by the at least one identifier comprises at least one CSI reconstruction model.

As one embodiment, the one model set indicated or identified by the at least one identifier comprises one or more models.

As one embodiment, the one model set indicated or identified by the at least one identifier comprises a plurality of models.

As one embodiment, the one model set indicated or identified by the at least one identifier is used for CSI reconstruction.

As one embodiment, the one model set indicated or identified by the at least one identifier comprises one or more CSI reconstruction models.

As one embodiment, the one model set indicated or identified by the at least one identifier comprises a plurality of CSI reconstruction models.

As one embodiment, the at least one identifier is used for indicating or identifying one model, and the one model indicated or identified by the at least one identifier is described by a parameter group used by the first decode.

As one embodiment, the at least one identifier is used for indicating or identifying one model, and a parameter group used by the first decode comprises the one model indicated or identified by the at least one identifier.

As one embodiment, the at least one identifier is used for indicating or identifying one model, and a parameter group used by the first decode is the one model indicated or identified by the at least one identifier.

As one embodiment, the at least one identifier is used for indicating or identifying at least one model, and one model in the at least one model indicated or identified by the at least one identifier is described by a parameter group used by the first decode.

As one embodiment, the at least one identifier is used for indicating or identifying at least one model, and a parameter group used by the first decode comprises one model in the at least one model indicated or identified by the at least one identifier.

As one embodiment, the at least one identifier is used for indicating or identifying at least one model, and a parameter group used by the first decode is one model in the at least one model indicated or identified by the at least one identifier.

As one embodiment, the at least one identifier is used for indicating or identifying one model set, and one model in the one model set indicated or identified by the at least one identifier is described by a parameter group used by the first decode.

As one embodiment, the at least one identifier is used for indicating or identifying one model set, and a parameter group used by the first decode comprises one model in the one model set indicated or identified by the at least one identifier.

As one embodiment, the at least one identifier is used for indicating or identifying one model set, and a parameter group used by the first decode is one model in the one model set indicated or identified by the at least one identifier.

As one embodiment, the at least one identifier is used for indicating or identifying a parameter group used by the first code from J parameter groups and indicating or identifying a parameter group used by the first decode from P parameter groups, the parameter group used by the first code is one parameter group amongst the J parameter groups, J is a positive integer greater than 1, the parameter group used by the first decode is one parameter group amongst the P parameter groups, and P is a positive integer.

As one sub-embodiment of the above embodiment, the at least one identifier comprises only one identifier, and the only one identifier is used for indicating or identifying a parameter group used by the first code from J parameter groups and indicating or identifying a parameter group used by the first decode from P parameter groups

As one sub-embodiment of the above embodiment, the at least one identifier comprises two identifiers, and the two identifiers are used for indicating or identifying a parameter group used by the first code from J parameter groups and indicating or identifying a parameter group used by the first decode from P parameter groups

As one embodiment, the at least one identifier comprises two identifiers, the two identifiers are respectively an identifier of a parameter group used by the first code amongst J parameter groups and an identifier of a parameter group used by the first decode amongst P parameter groups, the parameter group used by the first code is one parameter group amongst the J parameter groups, J is a positive integer greater than 1, the parameter group used by the first decode is one parameter group amongst the P parameter groups, and P is a positive integer.

As one embodiment, the at least one identifier is used for indicating or identifying at least one parameter group amongst J parameter groups and at least one parameter group amongst P parameter groups, the parameter group used by the first code is one parameter group amongst the J parameter groups, J is a positive integer greater than 1, the parameter group used by the first decode is one parameter group amongst the P parameter groups, and P is a positive integer.

As one sub-embodiment of the above embodiment, the at least one identifier comprises only one identifier, and the only one identifier is used for indicating or identifying at least one parameter group amongst the J parameter groups and at least one parameter group amongst the P parameter groups.

As one sub-embodiment of the above embodiment, the at least one identifier comprises two identifiers, and the two identifiers are respectively used for indicating or identifying at least one parameter group amongst the J parameter groups and at least one parameter group amongst the P parameter groups.

As one sub-embodiment of the above embodiment, the at least one identifier comprises a plurality of identifiers, and the plurality of identifiers are used for indicating or identifying at least one parameter group amongst the J parameter groups and at least one parameter group amongst the P parameter groups.

As one sub-embodiment of the above embodiment, the at least one identifier comprises two identifier groups, and the two identifier groups are respectively used for indicating or identifying at least one parameter group amongst the J parameter groups and at least one parameter group amongst the P parameter groups.

As one embodiment, the at least one identifier is used for indicating or identifying a first parameter set, the parameter group used by the first code is one parameter group amongst the J parameter groups, J is a positive integer greater than 1, the parameter group used by the first decode is one parameter group amongst the P parameter groups, and P is a positive integer.

As one sub-embodiment of the above embodiment, the first parameter set comprises one or more parameter groups amongst the J parameter groups and one or more parameter groups amongst the P parameter groups.

As one sub-embodiment of the above embodiment, the first parameter set comprises the J parameter groups and the P parameter groups.

As one sub-embodiment of the above embodiment, the first parameter set comprises a plurality of parameter groups amongst the J parameter groups and a plurality of parameter groups amongst the P parameter groups.

As one embodiment, the at least one identifier comprises one identifier in IE CSI-reportconfig.

As one embodiment, the at least one identifier comprises at least one identifier in IE CSI-reportconfig.

As one embodiment, the at least one identifier is used for indicating or identifying one model.

As one embodiment, the at least one identifier is used for indicating or identifying at least one model.

As one embodiment, the at least one identifier comprises an identifier of at least one model.

As one embodiment, the at least one identifier is used for indicating or identifying one model set.

As one embodiment, one model set comprises one or more models.

As one embodiment, one model set comprises a plurality of models.

As one embodiment, the one model indicated or identified by the at least one identifier is used for CSI generation and CSI reconstruction.

As one embodiment, the one model indicated or identified by the at least one identifier is one CSI generation and reconstruction model.

As one embodiment, the at least one model indicated or identified by the at least one identifier is used for CSI generation and CSI reconstruction.

As one embodiment, the at least one model indicated or identified by the at least one identifier comprises at least one CSI generation and reconstruction model.

As one embodiment, the at least one model indicated or identified by the at least one identifier comprises at least one CSI generation and at least one CSI reconstruction model.

As one embodiment, the one model set indicated or identified by the at least one identifier is used for CSI generation and CSI reconstruction.

As one embodiment, the one model set indicated or identified by the at least one identifier comprises one or more CSI generation and reconstruction models.

As one embodiment, the one model set indicated or identified by the at least one identifier comprises one or more CSI generation models and one or more CSI reconstruction models.

As one embodiment, the one model set indicated or identified by the at least one identifier comprises a plurality of CSI generation and reconstruction models.

As one embodiment, the one model set indicated or identified by the at least one identifier comprises one CSI generation model and one CSI reconstruction model.

As one embodiment, the at least one identifier is used for indicating or identifying one model, and the one model indicated or identified by the at least one identifier is jointly described by a parameter group used by the first code and a parameter group used by the first decode.

As one embodiment, the at least one identifier is used for indicating or identifying one model, and a parameter group used by the first code and a parameter group used by the first decode jointly comprise the one model indicated or identified by the at least one identifier.

As one embodiment, the at least one identifier is used for indicating or identifying one model, and a parameter group used by the first code and a parameter group used by the first decode are the one model indicated or identified by the at least one identifier.

As one embodiment, the at least one identifier is used for indicating or identifying at least one model, and one model in the at least one model indicated or identified by the at least one identifier is jointly described by a parameter group used by the first code and a parameter group used by the first decode.

As one embodiment, the at least one identifier is used for indicating or identifying at least one model, and two models in the at least one model indicated or identified by the at least one identifier are respectively described by a parameter group used by the first code and a parameter group used by the first decode.

As one embodiment, the at least one identifier is used for indicating or identifying at least one model, and a parameter group used by the first code and a parameter group used by the first decode respectively comprise two models in the at least one model indicated or identified by the at least one identifier.

As one embodiment, the at least one identifier is used for indicating or identifying at least one model, and a parameter group used by the first code and a parameter group used by the first decode are respectively two models in the at least one model indicated or identified by the at least one identifier.

As one embodiment, the at least one identifier is used for indicating or identifying one model set, and one model in the one model set indicated or identified by the at least one identifier is described by a parameter group used by the first code and a parameter group used by the first decode.

As one embodiment, the at least one identifier is used for indicating or identifying one model set, and two models in the one model set indicated or identified by the at least one identifier are respectively described by a parameter group used by the first code and a parameter group used by the first decode.

As one embodiment, the at least one identifier is used for indicating or identifying one model set, and a parameter group used by the first code and a parameter group used by the first decode jointly comprise one model in the one model set indicated or identified by the at least one identifier.

As one embodiment, the at least one identifier is used for indicating or identifying one model set, and a parameter group used by the first code and a parameter group used by the first decode respectively comprise two models in the one model set indicated or identified by the at least one identifier.

As one embodiment, the at least one identifier is used for indicating or identifying one model set, and a parameter group used by the first code and a parameter group used by the first decode are respectively two models in the one model set indicated or identified by the at least one identifier.

In Embodiment 6C, the at least one identifier is used for indicating or identifying at least one TCI state.

As one embodiment, the at least one identifier comprises a plurality of identifiers, and one identifier in the at least one identifier is used for indicating or identifying at least one TCI state.

As one embodiment, the at least one identifier comprises a plurality of identifiers, and part of identifiers in the at least one identifier are used for indicating or identifying at least one TCI state.

As one embodiment, the at least one identifier is an identifier of one TCI (Transmission Configuration Indicator) state.

As one embodiment, the at least one identifier comprises an identifier of at least one TCI state.

As one embodiment, the at least one identifier is an identifier of one TCI state group, and the one TCI state group comprises one or more TCI states.

As one embodiment, the at least one identifier is used for indicating or identifying one TCI state group, and the one TCI state group comprises one or more TCI states.

As one embodiment, the meaning of "the at least one identifier is used for determining a parameter group used by the first code" comprises: the parameter group used by the first code is obtained based on training one training data set, and the at least one TCI state indicated or identified by the at least one identifier is used for determining QCL (Quasi-CoLation) information of at least one RS resource corresponding to the one training data set.

As one embodiment, the meaning of "the at least one identifier is used for determining a parameter group used by the first code" comprises: the parameter group used by the first code is obtained based on training one training data set, and an RS resource in the at least one TCI state indicated or identified by the at least one identifier and at least one RS resource corresponding to the one training data set have the same QCL parameter.

As one embodiment, the meaning of "have the same QCL parameter" comprises: being assumed by the first node to have the same QCL parameter.

As one embodiment, the meaning of "the at least one identifier is used for determining a parameter group used by the first code" comprises: the parameter group used by the first code is obtained based on training one training data set, and an RS resource in the at least one TCI state indicated or identified by the at least one identifier corresponds to the one training data set.

As one embodiment, the meaning of "the at least one identifier is used for determining a parameter group used by the first code" comprises: J TCI state groups respectively correspond to J parameter groups, the at least one identifier is used for indicating or identifying one TCI state group in the J TCI state groups, the parameter group used by the first code is one parameter group amongst the J parameter groups corresponding to the one TCI state group indicated or identified by the at least one identifier, and J is a positive integer greater than 1.

As one embodiment, the meaning of "the at least one identifier is used for determining a parameter group used by the first code" comprises: J TCI states respectively correspond to J parameter groups, the at least one identifier is used for indicating or identifying one TCI state in the J TCI states, the parameter group used by the first code is one parameter group amongst the J parameter groups corresponding to the one TCI state indicated or identified by the at least one identifier, and J is a positive integer greater than 1.

In Embodiment 6D, the at least one identifier is used for indicating or identifying at least one RS resource.

As one embodiment, the at least one identifier comprises a plurality of identifiers, and one identifier in the at least one identifier is used for indicating or identifying at least one RS resource.

As one embodiment, the at least one identifier comprises a plurality of identifiers, and part of identifiers in the at least one identifier are used for indicating or identifying at least one RS resource.

As one embodiment, the at least one identifier comprises an identifier of one downlink RS resource and an identifier of one SRS resource.

As one embodiment, the at least one identifier comprises an identifier of one downlink RS resource and an identifier of one SRS resource set.

As one embodiment, the at least one identifier comprises an identifier of one RS resource and one RI.

As one embodiment, the at least one identifier comprises an identifier of one downlink RS resource set and an identifier of one SRS resource.

As one embodiment, the at least one identifier comprises an identifier of one downlink RS resource set and an identifier of one SRS resource set.

As one embodiment, the at least one identifier comprises an identifier of one RS resource set and one RI.

As one embodiment, the one downlink RS resource set comprises one or more of a CSI-RS resource or an SS/PBCH block resource.

As one embodiment, the one downlink RS resource set comprises one or more CSI-RS resources.

As one embodiment, the one downlink RS resource set comprises at least one CSI-RS resource and at least one SS/PBCH block resource.

As one embodiment, the at least one identifier comprises an identifier of at least one RS resource and an identifier of at least one SRS resource.

As one embodiment, the at least one identifier comprises an identifier of at least one RS resource and an identifier of at least one SRS resource set.

As one embodiment, the at least one identifier comprises an identifier of at least one RS resource and at least one RI.

As one embodiment, the at least one RS resource indicated or identified by the at least one identifier comprises one or more of a downlink RS resource or an uplink RS resource.

As one embodiment, the at least one RS resource indicated or identified by the at least one identifier comprises a downlink RS resource.

As one embodiment, the at least one RS resource indicated or identified by the at least one identifier comprises one or more of a CSI-RS resource and an SS/PBCH block resource.

As one embodiment, the at least one RS resource indicated or identified by the at least one identifier comprises one or more of a CSI-RS resource, an SS/PBCH block resource, or an SRS (Sounding Reference Signal) resource.

As one embodiment, the at least one RS resource indicated or identified by the at least one identifier comprises a downlink RS resource and an uplink RS resource.

As one embodiment, the at least one RS resource indicated or identified by the at least one identifier comprises one downlink RS resource and one uplink RS resource.

As one embodiment, the at least one RS resource indicated or identified by the at least one identifier comprises at least one downlink RS resource set and one uplink RS resource set.

As one embodiment, the at least one RS resource indicated or identified by the at least one identifier comprises one CSI-RS resource or SS/PBCH block resource, and one SRS resource.

As one embodiment, the at least one RS resource indicated or identified by the at least one identifier comprises at least one CSI-RS resource or SS/PBCH block resource, and at least one SRS resource.

As one embodiment, the at least one identifier is an identifier of one RS resource.

As one embodiment, the at least one identifier comprises an identifier of at least one RS resource.

As one embodiment, the at least one identifier is an identifier of one RS resource set, and the one RS resource set comprises one or more RS resources.

As one embodiment, the at least one identifier is used for indicating or identifying one

RS resource set, and the one RS resource set comprises one or more RS resources.

As one sub-embodiment of the above embodiment, the one RS resource set comprises one downlink RS resource and one uplink RS resource.

As one sub-embodiment of the above embodiment, the one RS resource set comprises at least one downlink RS resource and at least one uplink RS resource.

As one sub-embodiment of the above embodiment, the one RS resource set comprises one or more downlink RS resources and one or more uplink RS resources.

As one sub-embodiment of the above embodiment, the one RS resource set comprises at least one CSI-RS resource or SS/PBCH block resource, and at least one SRS resource.

As one sub-embodiment of the above embodiment, the one RS resource set comprises one or more CSI-RS resources or SS/PBCH block resources, and one or more SRS resources.

As one embodiment, the at least one identifier is used for indicating or identifying at least one training data set, and the at least one RS resource indicated or identified by the at least one identifier corresponds to the at least one training data set.

As one embodiment, the at least one identifier is used for indicating or identifying at least one training data set, and the at least one RS resource indicated or identified by the at least one identifier corresponds to one training data set in the at least one training data set.

As one embodiment, the meaning of "the at least one identifier is used for determining a parameter group used by the first code" comprises: the parameter group used by the first code is obtained based on training one training data set, and the at least one RS resource indicated or identified by the at least one identifier is used for determining a QCL parameter of at least one RS resource corresponding to the one training data set.

As one embodiment, the meaning of "the at least one identifier is used for determining a parameter group used by the first code" comprises: the parameter group used by the first code is obtained based on training one training data set, and the at least one RS resource indicated or identified by the at least one identifier and at least one RS resource corresponding to the one training data set have the same QCL parameter.

As one embodiment, the meaning of "have the same QCL parameter" comprises: being assumed by the first node to have the same QCL parameter.

As one embodiment, the meaning of "the at least one identifier is used for determining a parameter group used by the first code" comprises: the parameter group used by the first code is obtained based on training one training data set, and the at least one RS resource indicated or identified by the at least one identifier corresponds to the one training data set.

As one embodiment, the meaning of "the at least one identifier is used for determining a parameter group used by the first code" comprises: J RS resource sets respectively correspond to J parameter groups, the at least one identifier is used for indicating or identifying one RS resource set in the J RS resource sets, the parameter group used by the first code is one parameter group amongst the J parameter groups corresponding to the one RS resource set indicated or identified by the at least one identifier, and J is a positive integer greater than 1.

As one embodiment, the meaning of "the at least one identifier is used for determining a parameter group used by the first code" comprises: J RS resources respectively correspond to J parameter groups, the at least one identifier is used for indicating or identifying one RS resource in the J RS resources, the parameter group used by the first code is one parameter group amongst the J parameter groups corresponding to the one RS resource indicated or identified by the at least one identifier, and J is a positive integer greater than 1.

In Embodiment 6E, the at least one identifier is used for indicating or identifying at least one training data set.

As one embodiment, the at least one identifier comprises a plurality of identifiers, and one identifier in the at least one identifier is used for indicating or identifying at least one training data set.

As one embodiment, the at least one identifier comprises a plurality of identifiers, and part of identifiers in the at least one identifier are used for indicating or identifying at least one training data set.

As one embodiment, the at least one identifier is used for indicating or identifying at least one training data set, and the parameter group used by the first code is obtained based on training the at least one training data set.

As one embodiment, the at least one identifier is used for indicating or identifying a plurality of training data sets, and the parameter group used by the first code is obtained based on training one training data set in the plurality of training data sets.

As one embodiment, the at least one identifier is also used for indicating or identifying one RI (Rank Indicator).

As one embodiment, the at least one identifier is also used for indicating or identifying one or more RIs.

As one embodiment, the at least one identifier comprises two identifiers indicating different information.

As one embodiment, the at least one identifier comprises a plurality of identifiers indicating different information.

As one embodiment, the at least one identifier comprises a plurality of identifiers, and one identifier in the plurality of identifiers is used for indicating or identifying one RI (Rank Indicator).

As one embodiment, the at least one identifier comprises a plurality of identifiers, and one identifier in the plurality of identifiers is used for indicating or identifying one RI (Rank Indicator).

As one embodiment, the at least one identifier comprises a plurality of identifiers, and one identifier in the plurality of identifiers is used for indicating or identifying one or more RIs.

As one embodiment, the at least one identifier is used for indicating or identifying one configuration.

As one embodiment, the at least one identifier is used for indicating or identifying one scenario.

As one embodiment, the at least one identifier is used for indicating or identifying a reference CSI generation model.

As one embodiment, the at least one identifier is used for indicating or identifying a reference CSI reconstruction model.

As one embodiment, the at least one identifier is used for indicating or identifying a first reference code.

As one embodiment, the at least one identifier is used for indicating or identifying a first reference decode.

As one embodiment, the at least one identifier comprises a plurality of identifiers, and one identifier in the plurality of identifiers is used for indicating or identifying one configuration.

As one embodiment, the at least one identifier comprises a plurality of identifiers, and one identifier in the plurality of identifiers is used for indicating or identifying one scenario.

As one embodiment, the at least one identifier comprises a plurality of identifiers, and one identifier in the plurality of identifiers is used for indicating or identifying a reference CSI generation model.

As one embodiment, the at least one identifier comprises a plurality of identifiers, and one identifier in the plurality of identifiers is used for indicating or identifying a reference CSI reconstruction model.

### Embodiments 7A-7C

Embodiments 7A-7C respectively illustrate schematic diagrams of a performer of training of at least one parameter group amongst J parameter groups according to one embodiment of the present application, as shown in FIGS. 7A-7C.

In Embodiment 7A, the training of at least one parameter group amongst the J parameter groups is performed at the first node.

As one embodiment, training of each parameter group amongst the J parameter groups is performed at the first node.

As one embodiment, training of part of parameter groups amongst the J parameter groups is performed at the first node.

In Embodiment 7B, the training of at least one parameter group amongst the J parameter groups is performed by the sender of the first information block.

As one embodiment, the training of each parameter group amongst the J parameter groups is performed by the sender of the first information block.

As one embodiment, the training of part of parameter groups amongst the J parameter groups is performed by the sender of the first information block.

In Embodiment 7C, a performer of the training of at least one parameter group amongst the J parameter groups depends on a training type of at least one parameter group amongst the J parameter groups.

As one embodiment, whether a performer of the training of at least one parameter group amongst the J parameter groups is the first node or a sender of the first information block depends on a training type of at least one parameter group amongst the J parameter groups.

As one embodiment, a performer of the training of each parameter group in the J parameter groups depends on a training type of at least one parameter group amongst the J parameter groups.

As one embodiment, a performer of the training of part of parameter groups amongst the J parameter groups depends on a training type of at least one parameter group amongst the J parameter groups.

As one embodiment, when a training type of at least one parameter group amongst the J parameter groups is a first reference type in a first type set, a performer of the training of at least one parameter group amongst the J parameter groups is the first node; when a training type of at least one parameter group amongst the J parameter groups is a second reference type in a first type set, a performer of the training of at least one parameter group amongst the J parameter groups is a sender of the first information block; and the first type set comprises a plurality of training types, and the first reference type and the second reference type are two different training types in the first type set.

As one sub-embodiment of the above embodiment, the first reference type comprises that the first code is trained or generated or maintained in the first node, and the second reference type comprises that the first code is trained or generated or maintained in the sender of the first information block.

As one sub-embodiment of the above embodiment, the first reference type is type 1 and the first code is trained or generated or maintained in the first node, the second reference type is type 1 and the first code is trained or generated or maintained in the sender of the first information block.

As one sub-embodiment of the above embodiment, the first reference type is type 1 and the first code is trained or generated or maintained in the first node, and the second reference type is type 2.

As one sub-embodiment of the above embodiment, the first reference type is type 3, the second reference type is type 1 and the first code is trained or generated or maintained in the sender of the first information block.

As one sub-embodiment of the above embodiment, the first reference type is type 3, and the second reference type is type 2.

As one embodiment, when a training type of at least one parameter group amongst the J parameter groups is a first reference type in a first type set, a performer of the training of at least one parameter group amongst the J parameter groups is the first node; when a training type of at least one parameter group amongst the J parameter groups is a second reference type in the first type set, a performer of the training of at least one parameter group amongst the J parameter groups comprises the first node and a sender of the first information block; and the first type set comprises a plurality of training types, and the first reference type and the second reference type are two different training types in the first type set.

As one sub-embodiment of the above embodiment, the first reference type comprises that the first code is trained or generated or maintained in the first node, and the second reference type comprises that the first code is jointly trained or generated or maintained in the first node and a sender of the first information block.

As one sub-embodiment of the above embodiment, the first reference type is type 1 and the first code is trained or generated or maintained in the first node, and the second reference type is type 2.

As one sub-embodiment of the above embodiment, the first reference type is type 3, and the second reference type is type 2.

As one embodiment, when a training type of at least one parameter group amongst the J parameter groups is a first reference type in the first type set, a performer of the training of at least one parameter group amongst the J parameter groups comprises the first node and a sender of the first information block; when a training type of at least one parameter group amongst the J parameter groups is a second reference type in a first type set, a performer of the training of at least one parameter group amongst the J parameter groups is a sender of the first information block; and the first type set comprises a plurality of training types, and the first reference type and the second reference type are two different training types in the first type set.

As one sub-embodiment of the above embodiment, the first reference type comprises that the first code is jointly trained or generated or maintained in the first node and a sender of the first information block, and the second reference type comprises that the first code is trained or generated or maintained in a sender of the first information block.

As one sub-embodiment of the above embodiment, the first reference type is type 2, the second reference type is type 1 and the first code is trained or generated or maintained in a sender of the first information block.

### Embodiment 8

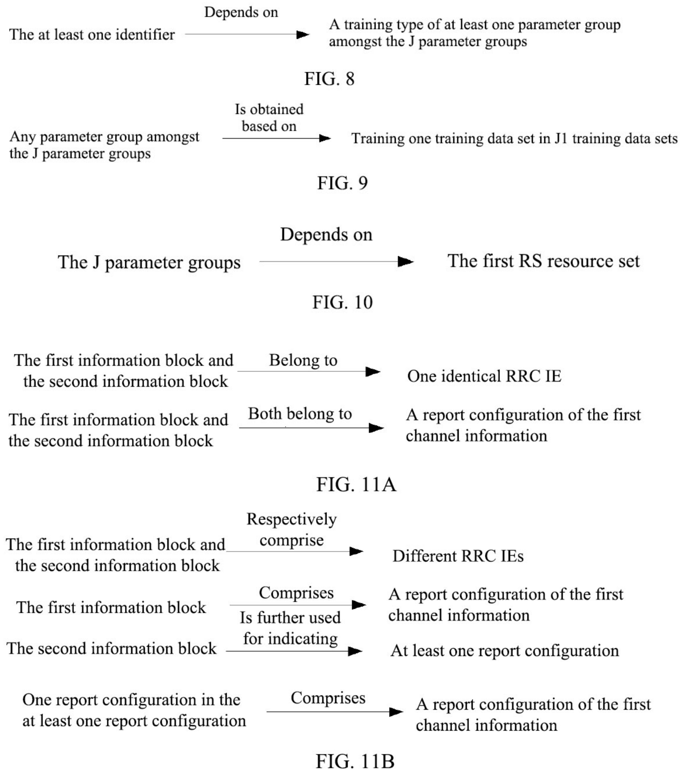

Embodiment 8 illustrates a schematic diagram of at least one identifier according to one embodiment of the present application, as shown in FIG. 8.

In Embodiment 8, the at least one identifier depends on a training type of at least one parameter group amongst the J parameter groups.

As one embodiment, information indicated by the at least one identifier depends on a training type of at least one parameter group amongst the J parameter groups.

As one embodiment, a value range of the at least one identifier depends on a training type of at least one parameter group amongst the J parameter groups.

As one embodiment, the at least one identifier is used for indicating or identifying at least one of a parameter group used by the first code or a parameter group used by the first decode; and the at least one identifier is used for indicating or identifying which one or which of a parameter group used by the first code or a parameter group used by the first decode depend(s) on the training type of at least one parameter group amongst the J parameter groups.

As one sub-embodiment of the above embodiment, when the training type of at least one parameter group amongst the J parameter groups comprises that the first code is trained or generated or maintained in the first node, the at least one identifier is used for indicating or identifying the parameter group used by the first code.

As one sub-embodiment of the above embodiment, when the training type of at least one parameter group amongst the J parameter groups comprises that the first code is trained or generated or maintained in the first node, the at least one identifier is used for indicating or identifying the parameter group used by the first decode.

As one sub-embodiment of the above embodiment, when the training type of at least one parameter group amongst the J parameter groups comprises that the first code is trained or generated or maintained in the sender of the first information block, the at least one identifier is used for indicating or identifying the parameter group used by the first code.

As one sub-embodiment of the above embodiment, when the training type of at least one parameter group amongst the J parameter groups is type 1, the at least one identifier is used for indicating or identifying the parameter group used by the first code.

As one sub-embodiment of the above embodiment, when the training type of at least one parameter group amongst the J parameter groups is type 1, the at least one identifier is used for indicating or identifying the parameter group used by the first code and the parameter group used by the first decode.

As one sub-embodiment of the above embodiment, when the training type of at least one parameter group amongst the J parameter groups is type 2, the at least one identifier is used for indicating or identifying the parameter group used by the first code and the parameter group used by the first decode.

As one sub-embodiment of the above embodiment, when the training type of at least one parameter group amongst the J parameter groups is type 2, the at least one identifier is used for indicating or identifying the parameter group used by the first code.

As one sub-embodiment of the above embodiment, when the training type of at least one parameter group amongst the J parameter groups is type 3, the at least one identifier is used for indicating or identifying a parameter group used by the first decode.

As one embodiment, the at least one identifier is used for indicating or identifying at least one TCI state, and the TCI state indicated or identified by the at least one identifier depends on the training type of at least one parameter group amongst the J parameter groups.

As one sub-embodiment of the above embodiment, when the training type of at least one parameter group amongst the J parameter groups comprises that the first code is trained or generated or maintained in the first node, the TCI state indicated or identified by the at least one identifier belongs to a first TCI set, and the first TCI set comprises one or more TCI states.

As one sub-embodiment of the above embodiment, when the training type of at least one parameter group amongst the J parameter groups comprises that the first code is trained or generated or maintained in a sender of the first information block, the TCI state indicated or identified by the at least one identifier belongs to a second TCI set, and the second TCI set comprises one or more TCI states.

As one sub-embodiment of the above embodiment, when the training type of at least one parameter group amongst the J parameter groups is type 1, the TCI state indicated or identified by the at least one identifier belongs to a third TCI set, and the third TCI set comprises one or more TCI states.

As one sub-embodiment of the above embodiment, when the training type of at least one parameter group amongst the J parameter groups is type 2, the TCI state indicated or identified by the at least one identifier belongs to a fourth TCI set, and the fourth TCI set comprises one or more TCI states.

As one sub-embodiment of the above embodiment, when the training type of at least one parameter group amongst the J parameter groups is type 3, the TCI state indicated or identified by the at least one identifier belongs to a fifth TCI set, and the fifth TCI set comprises one or more TCI states.

As one embodiment, the at least one identifier is used for indicating or identifying at least one RS resource, and the RS resource indicated or identified by the at least one identifier depends on the training type of at least one parameter group amongst the J parameter groups.

As one sub-embodiment of the above embodiment, when the training type of at least one parameter group amongst the J parameter groups comprises that the first code is trained or generated or maintained in the first node, the RS resource indicated or identified by the at least one identifier belongs to a first RS resource group, and the first RS resource group comprises one or more RS resources.

As one sub-embodiment of the above embodiment, when the training type of at least one parameter group amongst the J parameter groups comprises that the first code is trained or generated or maintained in a sender of the first information block, the RS resource indicated or identified by the at least one identifier belongs to a second RS resource group, and the second RS resource group comprises one or more RS resources.

As one sub-embodiment of the above embodiment, when the training type of at least one parameter group amongst the J parameter groups is type 1, the RS resource indicated or identified by the at least one identifier belongs to a third RS resource group, and the third RS resource group comprises one or more RS resources.

As one sub-embodiment of the above embodiment, when the training type of at least one parameter group amongst the J parameter groups is type 2, the RS resource indicated or identified by the at least one identifier belongs to a fourth RS resource group, and the fourth RS resource group comprises one or more RS resources.

As one sub-embodiment of the above embodiment, when the training type of at least one parameter group amongst the J parameter groups is type 3, the RS resource indicated or identified by the at least one identifier belongs to a fifth RS resource group, and the fifth RS resource group comprises one or more RS resources.

As one embodiment, the at least one identifier is used for indicating or identifying at least one training data set, and the training data set indicated or identified by the at least one identifier depends on the training type of at least one parameter group amongst the J parameter groups.

As one sub-embodiment of the above embodiment, when the training type of at least one parameter group amongst the J parameter groups comprises that the first code is trained or generated or maintained in the first node, the training data set indicated or identified by the at least one identifier belongs to a first training data pool, and the first training data pool comprises one or more training data sets.

As one sub-embodiment of the above embodiment, when the training type of at least one parameter group amongst the J parameter groups comprises that the first code is trained or generated or maintained in a sender of the first information block, the training data set indicated or identified by the at least one identifier belongs to a second training data pool, and the second training data pool comprises one or more training data sets.

As one sub-embodiment of the above embodiment, when the training type of at least one parameter group amongst the J parameter groups is type 1, the training data set indicated or identified by the at least one identifier belongs to a third training data pool, and the third training data pool comprises one or more training data sets.

As one sub-embodiment of the above embodiment, when the training type of at least one parameter group amongst the J parameter groups is type 2, the training data set indicated or identified by the at least one identifier belongs to a fourth training data pool, and the fourth training data pool comprises one or more training data sets.

As one sub-embodiment of the above embodiment, when the training type of at least one parameter group amongst the J parameter groups is type 3, the training data set indicated or identified by the at least one identifier belongs to a fifth training data pool, and the fifth training data pool comprises one or more training data sets.

### Embodiment 9

Embodiment 9 illustrates a schematic diagram of a relationship between J parameter groups and J1 training data sets according to one embodiment of the present application, as shown in FIG. 9.

In Embodiment 9, any parameter group amongst the J parameter groups is obtained based on training one training data set in J1 training data sets, and J1 is a positive integer.

As one embodiment, the J1 is equal to 1.

As one embodiment, the J1 is greater than 1.

As one embodiment, the J1 is greater than 1, and the J parameter groups are all obtained based on training one identical training data set in J1 training data sets.

As one embodiment, the J1 is greater than 1, and in the J training data sets, there are two parameter groups obtained based on training one identical parameter data set in the J1 training data sets.

As one embodiment, the J1 is greater than 1, and in the J training data sets, there are two parameter groups obtained based on training different parameter data sets in the J1 training data sets, respectively.

As one embodiment, in the J1 training data sets, there are two training data sets including one piece of identical training data.

As one embodiment, any two training data sets in the J1 training data sets comprise at least one piece of different training data.

As one embodiment, the J1 is greater than 1, and any training data set in the J1 training data sets corresponds to one or more RS resources.

As one embodiment, the J1 is greater than 1, any training data set in the J1 training data sets corresponds to one of J2 RS resource sets, and J2 is a positive integer greater than 1.

As one embodiment, the J1 is greater than 1, in the J1 training data sets, there are two training data sets corresponding to two RS resource sets in J2 RS resource sets, respectively, and J2 is a positive integer greater than 1.

As one embodiment, the J1 is greater than 1, in the J1 training data sets, there are two training data sets corresponding to one identical RS resource set in J2 RS resource sets, and J2 is a positive integer greater than 1.

As one embodiment, the J1 is greater than 1, the J1 training data sets respectively correspond to J2 RS resource sets, J2 is a positive integer greater than 1, and J2 is equal to J1.

As one embodiment, any RS resource set in the J2 RS resource sets comprises one or more RS resources.

As one embodiment, any RS resource set in the J2 RS resource sets comprises a plurality of RS resources.

As one embodiment, an RS resource corresponding to one training data set comprises a downlink RS resource.

As one embodiment, an RS resource corresponding to one training data set comprises one or more of a CSI-RS resource, an SS/PBCH block resource, or an SRS resource.

As one embodiment, an RS resource corresponding to one training data set comprises at least one of a CSI-RS resource or an SS/PBCH block resource.

As one embodiment, an RS resource corresponding to one training data set comprises a CSI-RS resource.

As one embodiment, one training data set comprises one or more pieces of training data.

As one embodiment, one training data set comprises channel information obtained by measurements for one or more RS resources.

As one embodiment, one training data set corresponds to one or more RS resources.

As one embodiment, one training data set corresponds to a plurality of RS resources.

As one embodiment, the meaning of "one training data set corresponds to one RS resource" comprises: the one training data set comprises training data generated by a measurement for the one RS resource.

As one embodiment, the meaning of "one training data set corresponds to one RS resource" comprises: the one training data set comprises channel information obtained by a measurement for the one RS resource.

As one embodiment, the meaning of "one training data set corresponds to one RS resource" comprises: a measurement for the one RS resource is used for generating an input of the first code, and the one training data set comprises the input of the first code generated by the measurement for the one RS resource.

As one embodiment, the meaning of "one training data set corresponds to one RS resource" comprises: a measurement for the one RS resource is used for generating an input of the first code; and the one training data set comprises the input of the first code generated by the measurement for the one RS resource and an output after the input is subjected to the first code.

As one embodiment, the meaning of "one training data set corresponds to one RS resource" comprises: a measurement for the one RS resource is used for generating an input of the first code; and the one training data set comprises an output after the input of the first code generated by the measurement for the one RS resource is subjected to the first code, and an output after the first decode is obtained by using the output as an input of the first decode.

As one embodiment, the meaning of "one training data set corresponds to one RS resource" comprises: a measurement for the one RS resource is used for generating an input of the first code; and the one training data set comprises the input of the first code generated by the measurement for the one RS resource, an output after the input is subjected to the first code, and am output after the first decode is obtained by using the output as an input of the first decode.

As one embodiment, one piece of training data in one training data set comprises an input and an output of the first code.

As one embodiment, one piece of training data in one training data set comprises an input and an output of the first code.

As one embodiment, one piece of training data in one training data set comprises an input and an output of the first decode.

### Embodiment 10

Embodiment 10 illustrates a schematic diagram of J parameter groups according to one embodiment of the present application, as shown in FIG. 10.

In Embodiment 10, the J parameter groups depend on the first RS resource set.

As one embodiment, the meaning of "the J parameter groups depend on the first RS resource set" comprises: a measurement for at least one RS resource in the first RS resource set is used for generating part or all of parameters in the J parameter groups.

As one embodiment, the meaning of "the J parameter groups depend on the first RS resource set" comprises: a measurement for an RS resource that is QCL with at least one RS resource in the first RS resource set is used for generating part or all of parameters in the J parameter groups.

As one embodiment, the meaning of "the J parameter groups depend on the first RS resource set" comprises: the J parameter groups are obtained based on training one training data set, and the one training data set depends on the first RS resource set.

As one embodiment, the meaning of "the J parameter groups depend on the first RS resource set" comprises: any training data set in J1 training data sets corresponds to one of J2 RS resource sets, J1 is a positive integer greater than 1, and J2 is a positive integer greater than 1; the J parameter groups are obtained based on training one training data set in the J1 training data sets corresponding to a target RS resource set, and the target RS resource set is one of the J2 RS resource sets; and determination of the target RS resource set depends on the first RS resource set.

As one embodiment, the meaning of "the J parameter groups depend on the first RS resource set" comprises: the J parameter groups belong to a first parameter set, and the first parameter set depends on the first RS resource set.

As one embodiment, the meaning of "the first parameter set depends on the first RS resource set" comprises: the first parameter set is obtained based on training one training data set, and the one training data set depends on the first RS resource set.

As one embodiment, the meaning of "the first parameter set depends on the first RS resource set" comprises: any training data set in J1 training data sets corresponds to one of J2 RS resource sets, J1 is a positive integer greater than 1, and J2 is a positive integer greater than 1; the first parameter set is obtained based on training one training data set corresponding to a target RS resource set in the J1 training data sets, and the target RS resource set is one of the J2 RS resource sets; and determination of the target RS resource set depends on the first RS resource set.

As one embodiment, the meaning of "the first parameter set depends on the first RS resource set" comprises: a measurement for at least one RS resource in the first RS resource set is used for generating part or all of parameters in the first parameter set.

As one embodiment, the meaning of "the first parameter set depends on the first RS resource set" comprises: a measurement for an RS resource that is QCL with at least one RS resource in the first RS resource set is used for generating part or all of parameters in the first parameter set.

As one embodiment, the meaning of "the first parameter set depends on the first RS resource set" comprises: the first parameter set is one parameter set in a plurality of parameter sets, any parameter set in the plurality of parameter sets is obtained based on training one identical training data set in a plurality of training data sets, and in the plurality of parameter sets, there are two parameter sets obtained based on training different training data sets in the plurality of training data sets; and the first parameter set is obtained based on training one training data set in the plurality of training data sets, and the one training data set depends on the first RS resource set.

As one embodiment, the meaning of "the first parameter set depends on the first RS resource set" comprises: the first parameter set is one parameter set in a plurality of parameter sets, any parameter set in the plurality of parameter sets is obtained based on training one identical training data set in J1 training data sets, and in the plurality of parameter sets, there are two parameter sets obtained based on training different training data sets in the J1 training data sets; and the first parameter set is obtained based on training one training data set in the J1 training data sets, and the one training data set depends on the first RS resource set.

As one embodiment, the first parameter set is obtained based on training one training data set.

As one embodiment, the first parameter set is obtained based on training one identical training data set in the J1 training data sets.

As one embodiment, the first parameter set is obtained based on training one identical training data set in a plurality of training data sets.

As one embodiment, the first parameter set is one parameter set in a plurality of parameter sets, any parameter set in the plurality of parameter sets is obtained based on training one identical training data set, and any two parameter sets in the plurality of parameter sets are obtained based on training different training data sets.

As one embodiment, the first parameter set is one parameter set in a plurality of parameter sets, and any parameter set in the plurality of parameter sets comprises one or more parameter groups; and any parameter set in the plurality of parameter sets is obtained based on training one identical training data set in the J1 training data sets, and any two parameter sets in the plurality of parameter sets are obtained based on training different training data sets in the J1 training data sets.

As one embodiment, the meaning of "the one training data set depends on the first RS resource set" comprises: the one training data set comprises training data generated using a measurement for at least one RS resource in the first RS resource set.

As one embodiment, the meaning of "the one training data set depends on the first RS resource set" comprises: the one training data set corresponds to at least one RS resource in the first RS resource set.

As one embodiment, the meaning of "the one training data set depends on the first RS resource set" comprises: at least one RS resource in the first RS resource set and an RS resource corresponding to the one training data set are quasi co-located.

As one embodiment, the meaning of "the one training data set depends on the first RS resource set" comprises: any RS resource in the first RS resource set and one RS resource corresponding to the one training data set are quasi co-located.

As one embodiment, the meaning of "the one training data set depends on the first RS resource set" comprises: at least one RS resource in the first RS resource set and an RS resource corresponding to the one training data set have the same QCL parameter.

As one embodiment, the meaning of "the one training data set depends on the first RS resource set" comprises: any RS resource in the first RS resource set and one RS resource corresponding to the one training data set have the same QCL parameter.

As one embodiment, the meaning of "determination of the target RS resource set depends on the first RS resource set" comprises: the target RS resource set is one RS resource set in the J2 RS resource sets that comprises at least one RS resource in the first RS resource set.

As one embodiment, the meaning of "determination of the target RS resource set depends on the first RS resource set" comprises: the target RS resource set is one RS resource set in the J2 RS resource sets that comprises the first RS resource set.

As one embodiment, the meaning of "determination of the target RS resource set depends on the first RS resource set" comprises: the target RS resource set is the first RS resource set.

As one embodiment, the meaning of "determination of the target RS resource set depends on the first RS resource set" comprises: the target RS resource set is one RS resource set in the J2 RS resource sets that comprises an RS resource that is in QCL with at least one RS resource in the first RS resource set.

As one embodiment, the meaning of "determination of the target RS resource set depends on the first RS resource set" comprises: at least one RS resource in the first RS resource set and at least one RS resource in the target RS resource set have the same QCL parameter.

As one embodiment, the meaning of "determination of the target RS resource set depends on the first RS resource set" comprises: any RS resource in the first RS resource set and one RS resource in the target RS resource set have the same QCL parameter.

### Embodiments 11A-11B

Embodiments 11A-11B respectively illustrate schematic diagrams of a first information block and a second information block according to one embodiment of the present application, as shown in FIGS. 11A-11B.

In Embodiment 11A, the first information block and the second information block belong to one identical RRC IE, and the first information block and the second information block both belong to a report configuration of the first channel information.

As one embodiment, the at least one identifier comprises one identifier in N identifiers, the third information block configures or indicates part or all of identifiers in the N identifiers, and N is a positive integer greater than 1; and the first information block and the second information block belong to one identical RRC IE, and the third information block and the second information block belong to different RRC IEs.

As one embodiment, the second information block belongs to IE CSI-ResourceConfig.

As one embodiment, the second information block belongs to one IE in IE CSI-ResourceConfig, IE CSI-MeasConfig, and IECSI-ReportConfig.

As one embodiment, the third information block comprises one RRC IE.

As one embodiment, the third information block comprises part of fields in one RRC IE.

As one embodiment, the third information block comprises part or all of fields in one RRC IE.

As one embodiment, the third information block does not belong to any IE in IE CSI-ResourceConfig, IE CSI-MeasConfig, and IE CSI-ReportConfig.

As one embodiment, the third information block is part or all of fields in one IE other than IE CSI-ResourceConfig, IE CSI-MeasConfig, and IE CSI-ReportConfig.

As one embodiment, the third information block does not belong to IE CSI-ResourceConfig.

As one embodiment, the third information block is used for configuring or indicating N identifiers.

As one embodiment, the third information block is used for configuring or indicating only one identifier in N identifiers.

As one embodiment, the third information block is used for configuring or indicating the one identifier in N identifiers that is included in the at least one identifier in the N identifiers.

As one embodiment, the third information block is used for configuring or indicating the one identifier in the N identifiers that is included in the at least one identifier.

In Embodiment 11B, the first information block and the second information block respectively comprise different RRC IEs; the first information block comprises a report configuration of the first channel information; and the second information block is further used for indicating at least one report configuration, and one report configuration in the at least one report configuration comprises a report configuration of the first channel information.

As one embodiment, the second information block is also used for indicating one or more report configurations.

As one embodiment, the second information block is also used for indicating a plurality of report configurations.

As one embodiment, the at least one report configuration indicated by the second information block comprises one or more CSI report configurations.

As one embodiment, the first information block comprises part or all of fields in one CSI report configuration.

As one embodiment, the first information block comprises one report configuration in at least one report configuration.

As one embodiment, the first information block comprises a report configuration of the first channel information.

As one embodiment, the first information block comprises one report configuration in the at least one report configuration that comprises a report configuration of the first channel information.

As one embodiment, the first information block belongs to one report configuration in the at least one report configuration.

As one embodiment, the first information block belongs to a report configuration of the first channel information.

As one embodiment, the first information block belongs to one report configuration in the at least one report configuration that comprises a report configuration of the first channel information.

As one embodiment, the first information block belongs to one RRC IE, and the IE to which the first information block belongs is identified by one reportConfigId; and the second information block comprises at least one reportConfigId, and the at least one reportConfigId included in the second information block comprises reportConfigId used for identifying an RRC IE to which the first information block belongs.

As one embodiment, the second information block comprises at least one reportConfigId, and one reportConfigId in the at least one reportConfigId included in the second information block is used for identifying a report configuration of the first channel information.

As one embodiment, the second information block comprises at least one report configuration identifier, and one report configuration identifier in the at least one report configuration identifier included in the second information block is used for identifying a report configuration of the first channel information.

### Embodiment 12

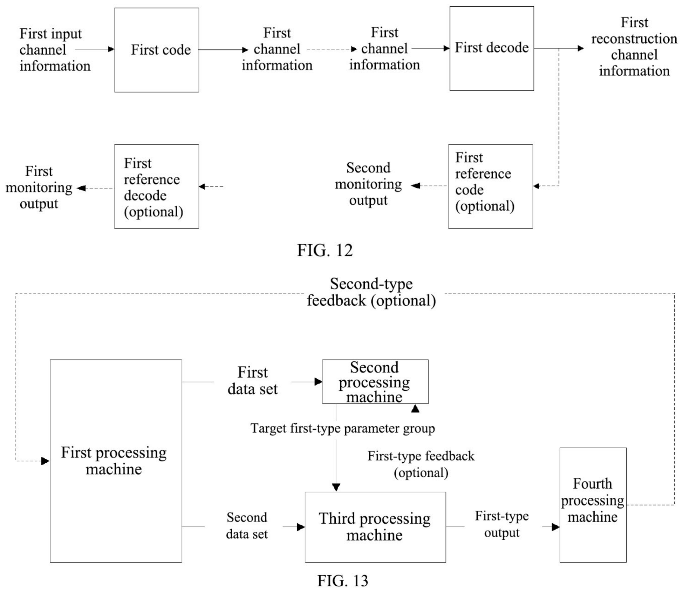

Embodiment 12 illustrates a flowchart of transmission of first channel information according to one embodiment of the present application, as shown in FIG. 12. In FIG. 12, a first reference decode is optional, and a first reference code is optional.

In Embodiment 12, a first code is executed in the first node and the second node in the present application, and a first decode is respectively executed in the first node and the second node in the present application.

The first code is used for generating the first channel information, an input of the first code comprises first input channel information, and a measurement for at least one RS resource in the first RS resource set is used for generating the first input channel information;
the first node sends the first channel information to the second node via an air interface;
and a first decode is used for generating first reconstruction channel information, an input of the first decode comprises the first channel information, or the first channel information is used for generating an input of the first decode.

As one embodiment, the second node is a sender of the first information block in the present application.

As one embodiment, a measurement for each RS resource in the first RS resource set is used for generating the first input channel information.

As one embodiment, a measurement for part of RS resources in the first RS resource set is used for generating the first input channel information.

As one embodiment, a measurement for one RS resource in the first RS resource set is used for generating the first input channel information.

As one embodiment, the first input channel information comprises a channel parameter matrix.

As one embodiment, the first input channel information comprises a matrix composed of at least one eigenvector.

As one embodiment, the first input channel information comprises at least one eigenvector.

As one embodiment, the first input channel information comprises a channel parameter matrix obtained by a measurement for at least one RS resource in the first RS resource set.

As one embodiment, the first input channel information comprises a channel parameter matrix composed of at least one eigenvector generated by a measurement for at least one RS resource in the first RS resource set.

As one embodiment, the first input channel information comprises at least one eigenvector generated by a measurement for at least one RS resource in the first RS resource set.

As one embodiment, the first input channel information only comprises one channel parameter matrix.

As one embodiment, the first input channel information comprises a plurality of channel parameter matrices, and the plurality of channel parameter matrices respectively correspond to a plurality of sub-bands.

As one embodiment, the first input channel information is generated by a measurement for one identical RS resource in the first RS resource set.

As one embodiment, the first input channel information comprises a plurality of channel parameter matrices, and the plurality of channel parameter matrices are respectively generated by measurements for different RS resources in the first RS resource set.

As one embodiment, the second node is the second node in the present application.

As one embodiment, the first node further executes a first reference decode, an input of the first reference decode comprises the first channel information, and an output of the first reference decode comprises a first monitoring output.

As one embodiment, the second node further executes a first reference code, an input of the first reference code comprises the first reconstruction channel information, and an output of the first reference code comprises a second monitoring output.

As one embodiment, the first code is used for CSI generation executed at the first node, and the CSI generation executed at the first node comprises generating the first channel information.

As one embodiment, CSI generation executed at the first node comprises CSI compression executed by the first node, and the CSI compression performed at the first node comprises generating the first channel information.

As one embodiment, the first reference code is used for CSI generation executed at the second node, and the CSI generation executed at the second node comprises generating the second monitoring output.

As one embodiment, CSI generation executed at the second node comprises CSI compression executed at the second node, and the CSI compression executed at the second node comprises generating the second monitoring output.

As one embodiment, the first decode is used for CSI reconstruction executed at the second node, and the CSI reconstruction executed at the second node comprises generating the first reconstruction channel information.

As one embodiment, the first decode executes an inverse operation of the first code.

As one embodiment, the first reference decode executes an inverse operation of the first code.

As one embodiment, the first reference code executes an inverse operation of the first decode.

As one embodiment, the first reference decode is used for CSI reconstruction executed at the first node, and the CSI reconstruction executed at the first node comprises generating the first monitoring output.

As one embodiment, the first monitoring output and the first input channel information are different.

As one embodiment, the meaning of "the first monitoring output and the first input channel information are different" comprises: the first monitoring output and the first input channel information cannot be considered the same.

As one embodiment, the first monitoring output comprises the first input channel information.

As one embodiment, the first monitoring output comprises an estimation of the first input channel information.

As one embodiment, an error between the first monitoring output and the first input channel information can be used for monitoring the performance of the first code, and common errors may be a mean square error, cosine similarity, etc.

As one embodiment, an error between the first monitoring output and the first input channel information can be used for training at least one of the first code or the first reference decode.

As one embodiment, the second monitoring output comprises the first channel information.

As one embodiment, the second monitoring output and the first channel information are the same.

As one embodiment, the second monitoring output and the first channel information are different.

As one embodiment, the meaning of "the second monitoring output and the first channel information are different" comprises: the second monitoring output and the first channel information cannot be considered the same.

As one embodiment, an error between the second monitoring output and the first channel information can be used for monitoring the performance of the first decode, and common errors may be a mean square error, cosine similarity, etc.

As one embodiment, an error between the second monitoring output and the first channel information can be used for training at least one of the first decode or the first code.

As one embodiment, the first code is executed in a first receiver.

As one embodiment, the first code is executed in a first transmitter.

As one embodiment, the first code is executed in at least one of a first receiver or a first transmitter.

As one embodiment, the first reference decode is executed in a first receiver.

As one embodiment, the first reference decode is executed in a first transmitter.

As one embodiment, the first reference decode is executed in at least one of a first receiver or a first transmitter.

As one embodiment, the first decode is executed in a second receiver.

As one embodiment, the first reference code is executed in a second receiver.

As one embodiment, the first reference code is executed in a second transmitter.

As one embodiment, the first reference code is executed in at least one of a second receiver or a second transmitter.

As one embodiment, the first decode and the first reference decode are the same.

As one embodiment, the first decode is different from the first reference decode.

As one embodiment, the meaning of "the first decode and the first reference decode are different" comprises: the first decode and the first reference decode cannot be considered the same.

As one embodiment, the first reference decode and the first decode both perform an inverse operation of the first code, but the two may only be approximate.

As one embodiment, the first reference decode and the first decode are the same, and the first reference decode is available at both the first node and the second node.

As one embodiment, the first reference decode is only available to the first node.

As one embodiment, the above method allows that the first node and the second node use different decodes to process the first channel information, thereby improving implementation flexibility for hardware vendors.

As one embodiment, the first code and the first reference code are the same.

As one embodiment, the first code and the first reference code are different.

As one embodiment, the meaning of "the first code and the first reference code are different" comprises: the first code and the first reference code cannot be considered the same.

As one embodiment, the first reference code and the first code both perform an inverse operation of the first decode, but the two may only be approximate.

As one embodiment, the first reference code and the first code are the same, and the first reference code is available at both the first node and the second node.

As one embodiment, the first reference code is only available to the second node.

As one embodiment, the above method allows that the first node and the second node use different codes, thereby improving implementation flexibility for hardware vendors.

As one embodiment, an output after inputting the first input channel information into the first code comprises the first channel information.

As one embodiment, an output after inputting the first input channel information into the first code is used for generating the first channel information.

As one embodiment, the meaning of "the first code is used for generating the first channel information" comprises: an output of the first code comprises the first channel information.

As one embodiment, the meaning of "the first code is used for generating the first channel information" comprises: an output of the first code is used for generating the first channel information.

As one embodiment, the meaning of the sentence "an output of the first code is used for generating the first channel information" comprises: the first channel information is obtained by calculating based on the output of the first code.

As one embodiment, the meaning of the sentence "an output of the first code is used for generating the first channel information" comprises: the first channel information is a quantified output obtained by using the output of the first code as the quantified input.

As one embodiment, the meaning of the sentence "an output of the first code is used for generating the first channel information" comprises: the first channel information is an output of a function obtained by using the output of the first code as the input of the function.

As one embodiment, the meaning of the sentence "an output of the first code is used for generating the first channel information" comprises: the first channel information is an output of a transform obtained by using the output of the first code as an input of the transform.

As one embodiment, the meaning of the sentence "the first channel information is used for generating an input of the first decode" comprises: the first channel information is input into the first decode after being subjected to de-quantification.

As one embodiment, the meaning of the sentence "the first channel information is used for generating an input of the first decode" comprises: the input of the first decode comprises an output after the first channel information is input into one function.

As one embodiment, the meaning of the sentence "the first channel information is used for generating an input of the first decode" comprises: the input of the first decoder comprises a result after the first channel information is subjected to a transform.

As one embodiment, the first input channel information is only available to the first node.

As one embodiment, the meaning of the sentence "the first input channel information is only available to the first node" comprises: in both the first node and the second node, the first input channel information is only available to the first node.

As one embodiment, the meaning of the sentence "the first input channel information is only available to the first node" comprises: the first input channel information is generated at the first node, and the first node does not send the first input channel information through an air interface.

As one embodiment, the meaning of the sentence "the first input channel information is only available to the first node" comprises: the first input channel information is generated at the first node, and the first node does not send, through an air interface, information that can be used for fully reconstructing the first input channel information.

As one embodiment, the meaning of the sentence "the first input channel information is only available to the first node" comprises: the first input channel information is generated at the first node, and the second node does not obtain the first input channel information.

As one embodiment, the first reconstruction channel information is only known to the second node.

As one embodiment, the first reconstruction channel information and the first input channel information are the same.

As one embodiment, the first reconstruction channel information and the first input channel information are different.

As one embodiment, the meaning of "the first reconstruction channel information and the first input channel information are different" comprises: the first reconstruction channel information and the first input channel information cannot be considered the same.

As one embodiment, when the first reference decode and the first decode are the same, the first reconstruction channel information and the first input channel information are the same.

As one embodiment, when the first reference decode and the first decode are different, the first reconstruction channel information and the first input channel information are different.

As one embodiment, the first code is obtained by training.

As one embodiment, the first code uses an artificial intelligence-based method.

As one embodiment, the training of the first code is executed at the first node.

As one embodiment, the training of the first code is executed at the second node.

As one embodiment, the training for the first code is used for obtaining the first code.

As one embodiment, the training for the first code is used for obtaining the first code and the first reference code.

As one embodiment, the training for the first code is used for obtaining the first code as well as the first reference decode.

As one embodiment, the training for the first code is used for obtaining the first code as well as the first decode.

As one embodiment, the training for the first code is used for obtaining at least the first code in the first code, the first reference decode, the first decode, or the first reference code.

As one embodiment, the training for the first code is used for obtaining the first code, the first reference decode, the first decode, and the first reference code.

As one embodiment, the first decode is obtained by training. f

As one embodiment, the first decode uses an artificial intelligence-based method.

As one embodiment, the training of the first decode is executed at the first node.

As one embodiment, the training of the first decode is executed at the second node.

As one embodiment, the first reference code is obtained by training.

As one embodiment, the first reference code uses an artificial intelligence-based method.

As one embodiment, the training of the first reference code is executed at the first node.

As one embodiment, the training of the first reference code is executed at the second node.

As one embodiment, the first reference decode is obtained by training.

As one embodiment, the first reference decode uses an artificial intelligence-based method.

As one embodiment, the training of the first reference decode is executed at the first node.

As one embodiment, the training of the first reference decode is executed at the second node.

As one embodiment, the first reference decode and the first decode are the same, and the first decode is trained or generated or maintained in only one of the first node or the second node.

As one embodiment, the first reference decode and the first decode are trained or generated or maintained in only one of the first node or the second node.

As one embodiment, the first reference decode and the first decode are separately or independently trained or generated or maintained in the first node and the second node, respectively.

As one embodiment, the first reference code and the first code are the same, and the first code is trained or generated or maintained in only one of the first node or the second node.

As one embodiment, the first reference code and the first code are trained or generated or maintained in only one of the first node or the second node.

As one embodiment, the first reference code and the first code are separately or independently trained or independently generated or independently maintained in the second node and the first node, respectively.

As one embodiment, the first code and the first decode are jointly trained or generated or maintained in only one of the first node or the second node.

As one embodiment, the first code and the first decode are jointly trained or generated or maintained in the first node and the second node.

As one embodiment, the first code and the first decode are separately or independently trained or generated or maintained in the first node and the second node, respectively.

As one embodiment, a specific operation of the first code is self-determined by an equipment vendor.

As one embodiment, a specific operation of the first code is self-determined by the first node or the second node.

As one embodiment, an artificial intelligence algorithm used by the first code is self-determined by an equipment vendor.

As one embodiment, an artificial intelligence algorithm used by the first code is self-determined by the first node or the second node.

As one embodiment, a specific operation of the first decode is self-determined by an equipment vendor.

As one embodiment, a specific operation of the first decode is self-determined by the first node or the second node.

As one embodiment, an artificial intelligence algorithm used by the first decode is self-determined by an equipment vendor.

As one embodiment, an artificial intelligence algorithm used by the first decode is self-determined by the first node or the second node.

As one embodiment, a specific operation of the first reference code is self-determined by an equipment vendor.

As one embodiment, a specific operation of the first reference code is self-determined by the first node or the second node.

As one embodiment, an artificial intelligence algorithm used by the first reference code is self-determined by an equipment vendor.

As one embodiment, an artificial intelligence algorithm used by the first reference code is self-determined by the first node or the second node.

As one embodiment, a specific operation of the first reference decode is self-determined by an equipment vendor.

As one embodiment, a specific operation of the first reference decode is self-determined by the first node or the second node.

As one embodiment, an artificial intelligence algorithm used by the first reference decode is self-determined by an equipment vendor.

As one embodiment, an artificial intelligence algorithm used by the first reference decode is self-determined by the first node or the second node.

As one embodiment, the training of the first code comprises obtaining, by training, a parameter group used by the first code.

As one embodiment, the training of the first code comprises obtaining at least one parameter group amongst J parameter groups by training, a parameter group used by the first code is one parameter group amongst the J parameter groups, and J is a positive integer greater than 1.

As one embodiment, the training of the first code comprises obtaining J parameter groups by training, a parameter group used by the first code is one parameter group amongst the J parameter groups, and J is a positive integer greater than 1.

As one embodiment, a parameter group used by the first code is one parameter group amongst J parameter groups, and J is a positive integer greater than 1.

As one embodiment, the J parameter groups are respectively used for describing J models.

As one embodiment, the J parameter groups respectively comprise J models.

As one embodiment, the J parameter groups are respectively J models.

As one embodiment, the J models are respectively J CSI generation models.

As one embodiment, the J parameter groups are different from each other.

As one embodiment, the J parameter groups are self-determined by an equipment vendor.

As one embodiment, the J parameter groups are self-determined by the first node or the second node.

As one embodiment, at least one parameter group amongst the J parameter groups is predefined.

As one embodiment, at least one parameter group amongst the J parameter groups is self-determined by the first node.

As one embodiment, at least one parameter group amongst the J parameter groups is sent by the second node to the first node.

As one embodiment, the first node sends at least one parameter group amongst the J parameter groups to the second node.

As one embodiment, at least one parameter group amongst the J parameter groups is obtained by training.

As one embodiment, each parameter group amongst the J parameter groups is obtained by training.

As one embodiment, part of parameter groups amongst the J parameter groups are obtained by training.

As one embodiment, part or all of parameter groups amongst the J parameter groups are obtained by training.

As one embodiment, a parameter group used by the first code is obtained by training.

As one embodiment, a parameter group used by the first code comprises one or more parameters.

As one embodiment, a parameter group used by the first code is used for describing the first code.

As one embodiment, a parameter group used by the first code is used for describing a model used by the first code.

As one embodiment, a parameter group used by the first code comprises a model used by the first code.

As one embodiment, a parameter group used by the first code is a model used by the first code.

As one embodiment, a model used by the first code is a CSI generation model.

As one embodiment, the training of the first decode comprises obtaining, by training, a parameter group used by the first decode.

As one embodiment, the training of the first decode comprises obtaining at least one parameter group amongst P parameter groups by training, a parameter group used by the first decode is one parameter group amongst the P parameter groups, and P is a positive integer.

As one embodiment, the training of the first decode comprises obtaining P parameter groups by training, a parameter group used by the first decode is one parameter group amongst the P parameter groups, and P is a positive integer.

As one embodiment, the P is equal to 1.

As one embodiment, the P is greater than 1, and the P parameter groups are different from each other.

As one embodiment, a parameter group used by the first decode is one parameter group amongst P parameter groups, and P is a positive integer.

As one embodiment, the P parameter groups are respectively used for describing P models.

As one embodiment, the P parameter groups respectively comprise P models.

As one embodiment, the P parameter groups are respectively P models.

As one embodiment, the P models are respectively P CSI reconstruction models.

As one embodiment, at least one parameter group in the P parameter groups is predefined.

As one embodiment, at least one parameter group in the P parameter groups is self-determined by the second node.

As one embodiment, at least one parameter group in the P parameter groups is sent to the second node by the first node.

As one embodiment, the second node sends at least one parameter group in the P parameter groups to the first node.

As one embodiment, at least one parameter group in the P parameter groups is obtained by training.

As one embodiment, each parameter group in the P parameter groups is obtained by training.

As one embodiment, part of parameter groups in the P parameter groups are obtained by training.

As one embodiment, part or all of parameter groups in the P parameter groups are obtained by training.

As one embodiment, a parameter group used by the first code comprises at least one parameter in Embodiment 14.

As one embodiment, a parameter group used by the first code comprises the number of coding layers, and comprises which one or which of {a full connection layer, a convolution layer, and a pooling layer}.

As one embodiment, a parameter group used by the first code comprises at least one of the number of coding layers, the size of input parameters of the coding layers, or the size of output parameters of the coding layers.

As one embodiment, a parameter group used by the first code comprises at least one of the number of coding layers, the size of input parameters of the coding layers, the size of output parameters of the coding layers, a threshold of an activation function, the size of a convolution kernel, the step of the convolution kernel, or weights between feature maps.

As one embodiment, at least one parameter group in the J parameter groups comprises at least one parameter in Embodiment 14.

As one embodiment, at least one parameter group in the J parameter groups comprises the number of coding layers, and comprises which one or which of {a full connection layer, a convolution layer, and a pooling layer}.

As one embodiment, at least one parameter group amongst the J parameter groups comprises at least one of the number of coding layers, the size of the input parameters of the coding layers, or the size of the output parameters of the coding layers.

As one embodiment, at least one parameter group amongst the J parameter groups comprises at least one of the number of coding layers, the size of the input parameters of the coding layers, the size of the output parameters of the coding layers, a threshold of an activation function, the size of a convolution kernel, the step of the convolution kernel, or weights between feature maps.

As one embodiment, any parameter group amongst the J parameter groups comprises at least one parameter in Embodiment 14.

As one embodiment, any parameter group amongst the J parameter groups comprises the number of coding layers, and comprises which one or which of {a full connection layer, a convolution layer, and a pooling layer}.

As one embodiment, any parameter group amongst the J parameter groups comprises at least one of the number of coding layers, the size of the input parameters of the coding layers, or the size of the output parameters of the coding layers.

As one embodiment, any parameter group amongst the J parameter groups comprises at least one of the number of coding layers, the size of input parameters of the coding layers, the size of output parameters of the coding layers, a threshold of an activation function, the size of a convolution kernel, the step of the convolution kernel, or weights between feature maps.

As one embodiment, a parameter group used by the first decode comprises at least one parameter in the first function in the present application.

As one embodiment, a parameter group used by the first decode comprises at least one of the number of decoding layer groups, the number of decoding layers, the size of input parameters of the decoding layers, or the size of output parameters of the decoding layers.

As one embodiment, a parameter group used by the first decode comprises at least one of the number of decoding layer groups, the number of decoding layers, the size of the input parameters of the decoding layers, the size of output parameters of the decoding layers, a threshold of an activation function, the size of a convolution kernel, the step of the convolution kernel, or weights between feature maps.

As one embodiment, any parameter group amongst the P parameter groups comprises at least one parameter in the first function in the present application.

As one embodiment, any parameter group amongst the P parameter groups comprises at least one of the number of decoding layer groups, the number of decoding layers, the size of input parameters of the decoding layers, or the size of the output parameters of the decoding layers.

As one embodiment, any parameter group amongst the P parameter groups comprises at least one of the number of decoding layer groups, the number of decoding layers, the size of input parameters of the decoding layers, the size of the output parameters of the decoding layers, a threshold of an activation function, the size of a convolution kernel, the step of the convolution kernel, or weights between feature maps.

As one embodiment, a parameter group used by the first decode is obtained by training.

As one embodiment, a parameter group used by the first decode comprises one parameter or a plurality of parameters.

As one embodiment, a parameter group used by the first decode is used for describing the first decode.

As one embodiment, a parameter group used by the first decode is used for describing a model used by the first decode.

As one embodiment, a parameter group used by the first decode comprises a model used by the first decode.

As one embodiment, a parameter group used by the first decode is a model used by the first decode.

As one embodiment, a model used by the first decode is one CSI reconstruction model.

As one embodiment, any parameter group amongst the J parameter groups corresponds to one parameter group amongst the P parameter groups.

As one embodiment, J is equal to P, and the J parameter groups correspond to the P parameter groups one by one.

As one embodiment, the meaning of "one parameter group amongst the J parameter groups corresponds to one parameter group amongst the P parameter groups" comprises: one parameter group amongst the P parameter groups is used for an inverse operation of the corresponding one parameter group amongst the J parameter groups.

As one embodiment, the meaning of "one parameter group amongst the J parameter groups corresponds to one parameter group amongst the P parameter groups" comprises: one parameter group amongst the P parameter groups and one corresponding parameter group amongst the J parameter groups are obtained based on training one identical training data set.

As one embodiment, when the first code uses a first parameter group amongst the J parameter groups to generate the first channel information, the first decode uses one parameter group amongst the P parameter groups corresponding to the first parameter group to generate the first reconstruction channel information; and the first parameter group is one of the J parameter groups.

As one embodiment, a parameter group used by the first code corresponds to a parameter group used by the first decode.

As one embodiment, a parameter group used by the first decode depends on a parameter group used by the first code.

As one embodiment, the first decode uses one parameter group amongst the P parameter groups that corresponds to the parameter group used by the first code to generate the first reconstruction channel information.

As one embodiment, P is greater than 1, and in the J parameter groups, there are two parameter groups respectively corresponding to two parameter groups amongst the P parameter groups.

As one embodiment, a parameter group used by the first code is one parameter group amongst J parameter groups, and J is a positive integer greater than 1; a parameter group used by the first decode is one parameter group amongst P parameter groups, and P is a positive integer; any parameter group amongst the J parameter groups corresponds to one parameter group amongst the P parameter groups; and the parameter group used by the first decode is one parameter group amongst the P parameter groups that corresponds to the parameter group used by the first code.

As one embodiment, training types of the J parameter groups are the same.

As one embodiment, a training type of at least one parameter group amongst the J parameter groups describes how the first code is trained.

As one embodiment, a training type of at least one parameter group amongst the J parameter groups describes how the first code and the first decode are trained.

As one embodiment, the training type of at least one parameter group amongst the J parameter groups is type 1.

As one embodiment, the training type of at least one parameter group amongst the J parameter groups is type 2.

As one embodiment, the training type of at least one parameter group amongst the J parameter groups is type 3.

As one embodiment, the training type of at least one parameter group amongst the J parameter groups is one type in a first type set.

As one embodiment, the first type set comprises a plurality of training types.

As one embodiment, the first type set comprises at least one of type 1, type 2, or type 3.

As one embodiment, the first type set comprises at least two of type 1, type 2, or type 3.

As one embodiment, the first type set comprises type 1, type 2, and type 3.

As one embodiment, the first type set comprises type 1 and type 2.

As one embodiment, the first type set comprises type 2 and type 3.

As one embodiment, the type 1 comprises: the first code and the first decode are jointly trained or generated or maintained in only one of the first node or the second node.

As one embodiment, the type 2 comprises: the first code and the first decode are jointly trained or generated or maintained in the first node and the second node.

As one embodiment, the type 3 comprises: the first code and the first decode are separately or independently trained or generated or maintained in the first node and the second node respectively.

As one embodiment, the type 1 comprises: the J parameter groups and the P parameter groups are jointly trained or generated or maintained in only one of the first node and the second node.

As one embodiment, the type 2 comprises: the J parameter groups and the P parameter groups are jointly trained or generated or maintained in the first node and the second node.

As one embodiment, the type 3 comprises: the J parameter groups and the P parameter groups are separately or independently trained or generated or maintained in the first node and the second node respectively.

### Embodiment 13

Embodiment 13 illustrates a schematic diagram of an artificial intelligence processing system according to one embodiment of the present application, as shown in FIG. 13. FIG. 13 comprises a first processing machine, a second processing machine, a third processing machine, and a fourth processing machine.

In Embodiment 13, the first processing machine sends a first data set to the second processing machine, the second processing machine generates a target first-type parameter group according to the first data set, the second processing machine sends the target first-type parameter group generated to the third processing machine, and the third processing machine processes a second data set using the target first-type parameter group to obtain a first-type output, and then sends the first-type output to the fourth processing machine.

As one embodiment, the third processing machine sends first-type feedback to the second processing machine, and the first-type feedback is used for triggering recalculation or updating of the target first-type parameter group.

As one embodiment, the fourth processing machine sends second-type feedback to the first processing machine, the second-type feedback is used for generating the first data set or the second data set, or the second-type feedback is used for triggering sending of the first data set or the second data set.

As one embodiment, the first data set is a training data set, the second data set is an inference data set, and the second processing machine is used for training a model.

As one embodiment, the trained model is described by the target first-type parameter group.

As one embodiment, the target first-type parameter group comprises the trained model.

As one embodiment, the target first-type parameter group is the trained model.

As one embodiment, the third processing machine constructs a model according to the target first-type parameter group, then inputs the second data set into the model constructed to obtain the first-type output, and then sends the first-type output to the fourth processing machine.

As one embodiment, the third processing machine calculates an error between the first-type output and actual data to determine the performance of the trained model; and the actual data is data received after the second data set and transmitted by the first processing machine.

The above embodiment is particularly suitable for a prediction-related report.

As one embodiment, the third processing machine recovers a reference data set according to the first-type output, and an error between the reference data set and the second data set is used for generating the first-type feedback.

As one embodiment, recovery of the reference data set typically uses an inverse operation similar to that of the target first-type parameter group.

As one embodiment, the first-type feedback is used for reflecting the performance of the trained model; and when the performance of the trained model fails to meet requirements, the second processing machine will recalculate the target first-type parameter group.

Typically, when an error is excessively large or has not been updated for a long time, the performance of the trained model is considered to fail to meet requirements.

As one embodiment, the first data set comprises at least one of the J1 training data sets in the present application.

As one embodiment, the first data set is one training data set in the J1 training data sets in the present application.

As one embodiment, the first data set is the J1 training data sets in the present application.

As one embodiment, the second data set comprises the first input channel information in the present application.

As one embodiment, the first processing machine generates the first data set according to a measurement for a first wireless signal, and the first wireless signal comprises a downlink RS.

As one embodiment, the first processing machine generates the second data set according to a measurement for a second wireless signal, and the second wireless signal comprises at least one RS resource in the first RS resource set in the present application.

As one embodiment, the third processing machine comprises the first code in the present application, and generation of the first-type output is executed by the first code.

As one embodiment, the target first-type parameter group is a parameter group used by the first code in the present application.

As one embodiment, the target first-type parameter group is one of the J parameter groups in the present application.

As one embodiment, the third processing machine comprises the first reference decode in the present application, an input of the first reference decode comprises the first-type output, an output of the first reference decode comprises a reference data set, and the reference data set comprises the first monitoring output in the present application.

As one embodiment, the fourth processing machine comprises the first decode in the present application, and an input of the first decode comprises the first-type output, or the first-type output is used for generating an input of the first decode.

As one embodiment, the second-type feedback comprises an output of the first decode in the present application.

As one embodiment, an output of the first decode in the present application is used for generating the second-type feedback.

As one embodiment, the second-type feedback comprises the first reconstruction channel information in the present application.

As one embodiment, the first reconstruction channel information in the present application is used for generating the second-type feedback.

As one embodiment, the fourth processing machine comprises the first reference code in the present application.

As one embodiment, the second-type feedback comprises the second monitoring output in the present application.

As one embodiment, the second monitoring output in the present application is used for generating the second-type feedback.

As one embodiment, the first-type output comprises the first channel information in the present application.

As one embodiment, the first processing machine belongs to the first node.

As one embodiment, the third processing machine belongs to the first node.

As one embodiment, the fourth processing machine belongs to the second node.

As one embodiment, the second processing machine belongs to the first node.

The above embodiment avoids transmitting the first data set to the second node.

As one embodiment, the second processing machine belongs to the second node.

The above embodiment reduces the complexity of the first node.

As one embodiment, the third processing machine belongs to the second node, and the first node reports the target first-type parameter group to the second node.

As one embodiment, the first processing machine belongs to the first receiver in the present application.

As one embodiment, the second processing machine belongs to the first receiver in the present application.

As one embodiment, the second processing machine belongs to the first transmitter in the present application.

As one embodiment, the second processing machine belongs to at least one of the first receiver or the first transmitter in the present application.

As one embodiment, the second processing machine belongs to the second receiver in the present application.

As one embodiment, the second processing machine belongs to the second transmitter in the present application.

As one embodiment, the second processing machine belongs to at least one of the second receiver or the second transmitter in the present application.

As one embodiment, the third processing machine belongs to the first receiver in the present application.

As one embodiment, the third processing machine belongs to the first transmitter in the present application.

As one embodiment, the third processing machine belongs to at least one of the first receiver or the first transmitter in the present application.

As one embodiment, the fourth processing machine belongs to the second receiver in the present application.

As one embodiment, the fourth processing machine belongs to the second transmitter in the present application.

As one embodiment, the fourth processing machine belongs to at least one of the second receiver or the second transmitter in the present application.

### Embodiment 14

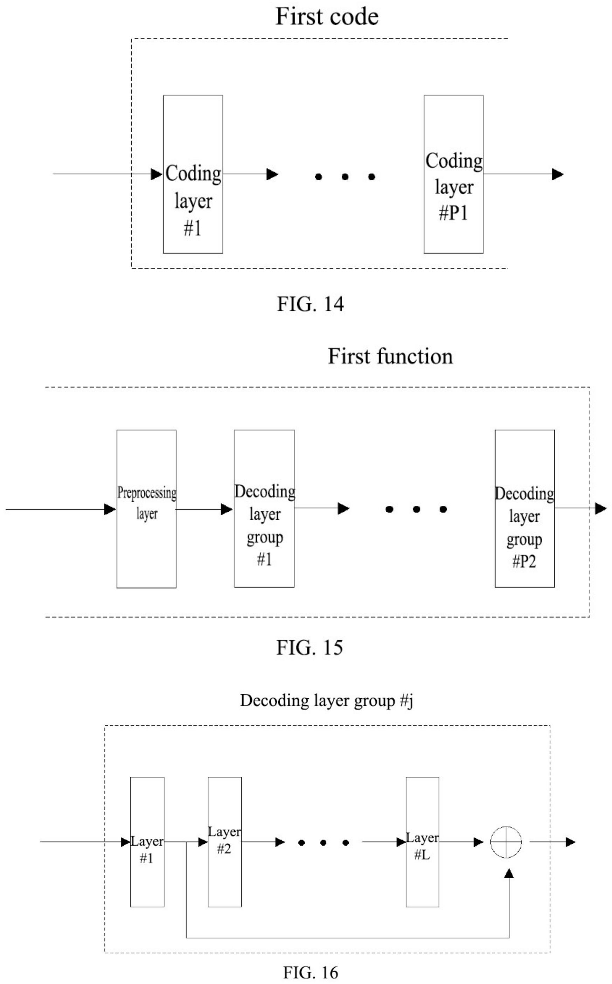

Embodiment 14 illustrates a schematic diagram of one code according to one embodiment of the present invention, as shown in FIG. 14. In FIG. 14, one code comprises P1 coding layers, namely, coding layers #1, #2, ..., #P1.

As one embodiment, the one code is the first code in the present application.

As one embodiment, the one code is the first reference code in the present application.

As one embodiment, the P1 is equal to 1.

As one embodiment, the P1 is greater than 1.

As one embodiment, the P1 coding layers comprise at least one of a full connection layer, a convolution layer, and a pooling layer.

As one embodiment, P1 is 2, namely, the P1 coding layers comprise a coding layer #1 and a coding layer #2, and the coding layer #1 and the coding layer #2 are respectively a convolution layer and a full connection layer; in the convolution layer, at least one convolution kernel is used for performing convolution on the first channel input to generate a corresponding feature map, and at least one feature map output by the convolution layer is reshaped into one vector and input to the full connection layer; and the full connection layer converts the one vector into the first channel information in the present application. For a more detailed description, please refer to CNN-related technical literatures, such as Chao-Kai Wen, Deep Learning for Massive MIMO CSI Feedback, IEEE WIRELESS COMMUNICATIONS LETTERS, VOL. 7, NO. 5, OCTOBER 2018, etc.

As one embodiment, P1 is 3, namely, the P1 coding layers comprise a full connection layer, a convolution layer, and a pooling layer.

### Embodiment 15

Embodiment 15 illustrates a schematic diagram of a first function according to one embodiment of the present invention, as shown in FIG. 15. In FIG. 15, the first function comprises a preprocessing layer and P2 decoding layer groups, namely, decoding layer groups #1, #2, ..., #P2, each decoding layer group including at least one decoding layer. Among them, the preprocessing layer is optional.

As one embodiment, the structure of the first function is applicable to the first decode in the present application.

As one embodiment, the structure of the first function is applicable to the first reference decode in the present application.

As one embodiment, the preprocessing layer is one full connection layer that enlarges the size of the first channel information to the size of the first input channel information.

As one embodiment, any two decoding layer groups in the P2 decoding layer groups are the same in structure, and the structure comprises the number of decoding layers, the size of input parameters, and the size of output parameters of each decoding layer, etc.

As one embodiment, the first node indicates P2 and the structure of the decoding layer group to the second node.

As one embodiment, the second node indicates P2 and the structure of the decoding layer group to the first node.

As one embodiment, the first node indicates other parameters of the first function to the second node.

As one embodiment, the second node indicates other parameters of the first function to the first node.

As one embodiment, the other parameters comprise at least one of a threshold of an activation function, the size of a convolution kernel, the step of the convolution kernel, and weights between feature maps.

### Embodiment 16

Embodiment 16 illustrates a schematic diagram of one decoding layer group according to one embodiment of the present invention, as shown in FIG. 16. In FIG. 16, a decoding layer group #j comprises L layers, namely, layers #1, #2, ..., #L; and the decoding layer group is any decoding layer group in the P2 decoding layer groups.

As one embodiment, L is 4, a first layer in the L layers is an input layer, and the last three layers of the L layers are convolution layers. For more detailed descriptions, refer to CNN-related technical literature, such as Chao-Kai Wen, Deep Learning for Massive MIMO CSI Feedback, IEEE WIRELESS COMMUNICATIONS LETTERS, VOL. 7, NO. 5, OCTOBER 2018, etc.

As one embodiment, the L layers comprise at least one convolution layer and one pooling layer.

### Embodiment 17

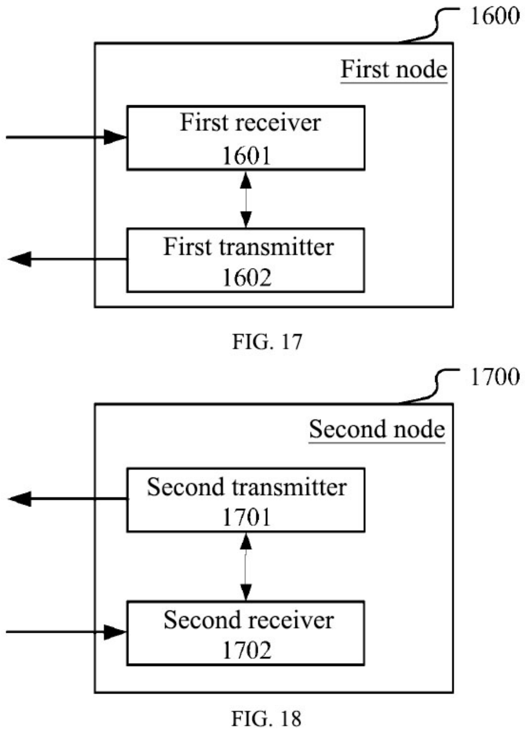

Embodiment 17 illustrates a structural block diagram of a processing device used in a first node according to one embodiment of the present application, as shown in FIG. 17. In FIG. 17, a processing device 1600 in the first node comprises a first receiver 1601 and a first transmitter 1602.

As one embodiment, the first node 1600 is one piece of user equipment.

As one embodiment, the first transmitter 1602 comprises at least one of an antenna 452, a transmitting device/receiving device 454, a multi-antenna transmitting device processor 457, a transmitting processor 468, a controller/processor 459, a memory 460, and a data source 467 in FIG. 4 of the present application.

As one embodiment, the first transmitter 1602 comprises an antenna 452, a transmitting device/receiving device 454, a multi-antenna transmitting device processor 457, a transmitting processor 468, a controller/processor 459, a memory 460, and the data source 467 in FIG. 4 of the present application.

As one embodiment, the first receiver 1601 comprises at least the first five of an antenna 452, a receiving device 454, a multi-antenna receiving processor 458, a receiving processor 456, a controller/processor 459, a memory 460, and a data source 467 in FIG. 4 of the present application.

As one embodiment, the first receiver 1601 comprises at least the first four of an antenna 452, a receiving device 454, a multi-antenna receiving processor 458, a receiving processor 456, a controller/processor 459, a memory 460, and a data source 467 in FIG. 4 of the present application.

As one embodiment, the first receiver 1601 comprises at least the first three of an antenna 452, a receiving device 454, a multi-antenna receiving processor 458, a receiving processor 456, a controller/processor 459, a memory 460, and a data source 467 in FIG. 4 of the present application.

The first receiver 1601 receives a first information block, the first information block being used for indicating a first RS resource set, and the first RS resource set comprising one or more RS resources; receives a second information block, the second information block indicating at least one identifier; and
the first transmitter 1602 sends first channel information;
in Embodiment 17, a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

As one embodiment, the at least one identifier is used for indicating or identifying a parameter group used by the first code; or the at least one identifier is used for indicating or identifying at least one of a parameter group used by the first code or a parameter group used by a first decode, and the first channel information is used by a sender of the first information block for an input of the first decode or the first channel information is used by a sender of the first information block for generating an input of the first decode; or the at least one identifier is used for indicating or identifying at least one TCI state; or the at least one identifier is used for indicating or identifying at least one RS resource; or the at least one identifier is used for indicating or identifying at least one training data set.

As one embodiment, the training of at least one parameter group in the J parameter groups is performed at the first node, or the training of at least one parameter group in the J parameter groups is performed by the sender of the first information block, or a performer of the training of at least one parameter group in the J parameter groups depends on a training type of at least one parameter group amongst the J parameter groups.

As one embodiment, the at least one identifier depends on a training type of at least one parameter group amongst the J parameter groups.

As one embodiment, any parameter group amongst the J parameter groups is obtained based on training one training data set in J1 training data sets, and J1 is a positive integer.

As one embodiment, the J parameter groups depend on the first RS resource set.

As one embodiment, it comprises:
the first receiver 1601 receiving a third information block,
wherein the at least one identifier comprises one identifier in N identifiers, the third information block configures or indicates part or all of identifiers in the N identifiers, and N is a positive integer greater than 1; and the first information block and the second information block belong to one identical RRC IE, and the third information block and the second information block belong to different RRC IEs.

As one embodiment, the first information block and the second information block respectively comprise different RRC IEs; the first information block comprises a report configuration of the first channel information; and the second information block is further used for indicating at least one report configuration, and one report configuration in the at least one report configuration comprises a report configuration of the first channel information.

### Embodiment 18

Embodiment 18 illustrates a structural block diagram of a processing device used in a second node according to one embodiment of the present application, as shown in FIG. 18. In FIG. 18, a processing device 1700 in the second node comprises a second transmitter 1701 and a second receiver 1702.

As one embodiment, the second node 1700 is one base station device.

As one embodiment, the second transmitter 1701 comprises the antenna 420, the transmitting device 418, the transmitting processor 416, and the controller/processor 475.

As one embodiment, the second transmitter 1701 comprises the antenna 420, the transmitting device 418, the multi-antenna transmitting processor 471, the transmitting processor 416, and the controller/processor 475.

As one embodiment, the second transmitter 1701 comprises the antenna 420, the transmitting device 418, the transmitting processor 416, and the controller/processor 475.

As one embodiment, the second transmitter 1701 comprises the antenna 420, the transmitting device 418, the multi-antenna transmitting processor 471, the transmitting processor 416, and the controller/processor 475.

As one embodiment, the second receiver 1702 comprises the antenna 420, the receiving device 418, the multi-antenna receiving processor 472, the receiving processor 470, and the controller/processor 475.

As one embodiment, the second receiver 1702 comprises the controller/processor 475.

The second transmitter 1701 sends a first information block, the first information block being used for indicating a first RS resource set, and the first RS resource set comprising one or more RS resources; and sends a second information block, the second information block indicating at least one identifier; and
the second receiver 1702 receives first channel information;
in Embodiment 18, a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

As one embodiment, the at least one identifier is used for indicating or identifying a parameter group used by the first code; or the at least one identifier is used for indicating or identifying at least one of a parameter group used by the first code or a parameter group used by a first decode, and the first channel information is used by a second node for an input of the first decode or the first channel information is used by a second node for generating an input of the first decode; or the at least one identifier is used for indicating or identifying at least one TCI state; or the at least one identifier is used for indicating or identifying at least one RS resource; or the at least one identifier is used for indicating or identifying at least one training data set.

As one embodiment, the training of at least one parameter group amongst the J parameter groups is performed at a sender of the first channel information, or the training of at least one parameter group amongst the J parameter groups is performed by the second node, or a performer of the training of at least one parameter group amongst the J parameter groups depends on a training type of at least one parameter group amongst the J parameter groups.

As one embodiment, the at least one identifier depends on a training type of at least one parameter group amongst the J parameter groups.

As one embodiment, any parameter group amongst the J parameter groups is obtained based on training one training data set in J1 training data sets, and J1 is a positive integer.

As one embodiment, the J parameter groups depend on the first RS resource set.

As one embodiment, it comprises:
the second transmitter 1701 sending a third information block,
wherein the at least one identifier comprises one identifier in N identifiers, the third information block configures or indicates part or all of identifiers in the N identifiers, and N is a positive integer greater than 1; and the first information block and the second information block belong to one identical RRC IE, and the third information block and the second information block belong to different RRC IEs.

As one embodiment, the first information block and the second information block respectively comprise different RRC IEs; the first information block comprises a report configuration of the first channel information; and the second information block is further used for indicating at least one report configuration, and one report configuration in the at least one report configuration comprises a report configuration of the first channel information.

As one embodiment, a first decode is used for generating first reconstruction channel information; an input of the first decode comprises the first channel information, or the first channel information is used for generating the input of the first decode; a parameter group used by the first decode is one parameter group amongst P parameter groups, and P is a positive integer; any parameter group amongst the J parameter groups corresponds to one parameter group amongst the P parameter groups; and the parameter group used by the first decode is one parameter group amongst the P parameter groups that corresponds to the parameter group used by the first code.

Those ordinarily skilled in the art can understand that all or part of the steps in the above method can be completed by instructing relevant hardware through a program, and the program can be stored in a computer-readable storage medium, such as a read-only memory, a hard disk or an optical disk, etc. Optionally, all or part of the steps in the above embodiment can also be implemented using one or more integrated circuits. Accordingly, each module unit in the above embodiment can be implemented in the form of hardware or in the form of a software function module. The present application is not limited to any specific form of software and hardware combination. The user equipment, terminal and UE in the present application comprise but are not limited to drones, communication modules on drones, remote-controlled aircrafts, aircrafts, small aircrafts, mobile phones, tablet computers, notebook computers, vehicle-mounted communication devices, wireless sensors, network access cards, Internet of Things terminals, RFID terminals, NB-IOT terminals, MTC (Machine Type Communication) terminals, eMTC (enhanced MTC) terminals, data cards, network access cards, vehicle-mounted communication devices, low-cost mobile phones, low-cost tablet computers, and other wireless communication devices.The base station or system equipment in the present application comprises but is not limited to MacroCellular base stations, MicroCellular base stations, Femtocells, relay base stations, gNB (NR nodes B) NR nodes B, TRPs (Transmitter Receiver Points), and other wireless communication devices.

Those skilled in the art should understand that the present invention can be implemented in other specified forms without departing from its core or basic features. Therefore, the embodiments disclosed at present should be regarded as descriptive rather than restrictive in any way. The scope of the present invention is determined by the appended claims rather than the foregoing description, and all modifications within their equivalent meanings and areas are considered to be comprised therein.

## Claims

1. A first node device for wireless communication, comprising:
a first receiver receiving a first information block, the first information block being used for indicating a first RS resource set, and the first RS resource set comprising one or more RS resources; and receiving a second information block, the second information block indicating at least one identifier;
and a first transmitter sending first channel information,
wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

2. The first node device according to claim 1, wherein the at least one identifier is used for indicating or identifying a parameter group used by the first code; or the at least one identifier is used for indicating or identifying at least one of a parameter group used by the first code or a parameter group used by a first decode, and the first channel information is used by a sender of the first information block for an input of the first decode or the first channel information is used by a sender of the first information block for generating an input of the first decode; or the at least one identifier is used for indicating or identifying at least one TCI state; or the at least one identifier is used for indicating or identifying at least one RS resource; or the at least one identifier is used for indicating or identifying at least one training data set.

3. The first node device according to claim 1 or 2, wherein the training of at least one parameter group amongst the J parameter groups is performed at the first node, or the training of at least one parameter group amongst the J parameter groups is performed by the sender of the first information block, or a performer of the training of at least one parameter group amongst the J parameter groups depends on a training type of at least one parameter group amongst the J parameter groups.

4. The first node device according to any one of claims 1 to 3, wherein the at least one identifier depends on a training type of at least one parameter group amongst the J parameter groups.

5. The first node device according to any one of claims 1 to 4, wherein any parameter group amongst the J parameter groups is obtained by based on training one training data set in J1 training data sets, and J1 is a positive integer.

6. The first node device according to any one of claims 1 to 5, wherein the J parameter groups depend on the first RS resource set.

7. The first node device according to any one of claims 1 to 6,
comprising: the first receiver receiving a third information block; wherein the at least one identifier comprises one identifier in N identifiers, the third information block configures or indicates part or all of identifiers in the N identifiers, and N is a positive integer greater than 1; and the first information block and the second information block belong to one identical RRC IE, and the third information block and the second information block belong to different RRC IEs;
or the first information block and the second information block respectively comprise different RRC IEs; the first information block comprises a report configuration of the first channel information; and the second information block is further used for indicating at least one report configuration, and one report configuration in the at least one report configuration comprises a report configuration of the first channel information.

8. A second node device for wireless communication, comprising:
a second transmitter sending a first information block, the first information block being used for indicating a first RS resource set, and the first RS resource set comprising one or more RS resources; and sending a second information block, the second information block indicating at least one identifier;
and a second receiver receiving first channel information,
wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

9. The second node device according to claim 8, wherein
the at least one identifier is used for indicating or identifying a parameter group used by the first code; or the at least one identifier is used for indicating or identifying at least one of a parameter group used by the first code or a parameter group used by a first decode, and the first channel information is used by a second node for an input of the first decode or the first channel information is used by a second node for generating an input of the first decode; or the at least one identifier is used for indicating or identifying at least one TCI state; or the at least one identifier is used for indicating or identifying at least one RS resource; or the at least one identifier is used for indicating or identifying at least one training data set.

10. The second node device according to claim 8 or 9, wherein
the training of at least one parameter group amongst the J parameter groups is performed at a sender of the first channel information, or the training of at least one parameter group amongst the J parameter groups is performed by the second node, or a performer of the training of at least one parameter group amongst the J parameter groups depends on a training type of at least one parameter group amongst the J parameter groups.

11. The second node device according to any one of claims 8 to 10, wherein
the at least one identifier depends on the training type of at least one parameter group amongst the J parameter groups.

12. The second node device according to any one of claims 8 to 11, wherein
any parameter group amongst the J parameter groups is obtained based on training one training data set in J1 training data sets, and J1 is a positive integer.

13. The second node device according to any one of claims 8 to 12, wherein
the J parameter groups depend on the first RS resource set.

14. The second node device according to any one of claim 12, comprising:
sending a third information block,
wherein the at least one identifier comprises one identifier in N identifiers, the third information block configures or indicates part or all of identifiers in the N identifiers, and N is a positive integer greater than 1; and the first information block and the second information block belong to one identical RRC IE, and the third information block and the second information block belong to different RRC IEs; or
the first information block and the second information block respectively comprise different RRC IEs; the first information block comprises a report configuration of the first channel information; and the second information block is further used for indicating at least one report configuration, and one report configuration in the at least one report configuration comprises a report configuration of the first channel information.

15. A method used in a first node device for wireless communication, comprising:
receiving a first information block, the first information block being used for indicating a first RS resource set, and the first RS resource set comprising one or more RS resources; receiving a second information block, the second information block indicating at least one identifier; and
sending first channel information,
wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

16. The method used in the first node device according to claim 15, wherein
the at least one identifier is used for indicating or identifying a parameter group used by the first code; or the at least one identifier is used for indicating or identifying at least one of a parameter group used by the first code or a parameter group used by a first decode, and the first channel information is used by a sender of the first information block for an input of the first decode or the first channel information is used by a sender of the first information block for generating an input of the first decode; or the at least one identifier is used for indicating or identifying at least one TCI state; or the at least one identifier is used for indicating or identifying at least one RS resource; or the at least one identifier is used for indicating or identifying at least one training data set.

17. The method used in the first node device according to claim 15 or 16, wherein
the training of at least one parameter group amongst the J parameter groups is performed at a first node, or the training of at least one parameter group amongst the J parameter groups is performed by the sender of the first information block, or a performer of the training of at least one parameter group amongst the J parameter groups depends on a training type of at least one parameter group amongst the J parameter groups.

18. The method used in the first node device according to any one of claims 15 to 17, wherein the at least one identifier depends on the training type of at least one parameter group amongst the J parameter groups.

19. The method used in the first node device according to any one of claims 15 to 18, wherein any parameter group amongst the J parameter groups is obtained based on training one training data set in J1 training data sets, and J1 is a positive integer.

20. The method used in the first node device according to any one of claims 15 to 19, wherein the J parameter groups depend on the first RS resource set.

21. The method used in the first node device according to claim 20, wherein
a third information block is received,
wherein the at least one identifier comprises one identifier in N identifiers, the third information block configures or indicates part or all of identifiers in the N identifiers, and N is a positive integer greater than 1; and the first information block and the second information block belong to one identical RRC IE, and the third information block and the second information block belong to different RRC IEs; or
the first information block and the second information block respectively comprise different RRC IEs; the first information block comprises a report configuration of the first channel information; and the second information block is further used for indicating at least one report configuration, and one report configuration in the at least one report configuration comprises a report configuration of the first channel information.

22. A method used in a second node device for wireless communication, comprising:
sending a first information block, the first information block being used for indicating a first RS resource set, and the first RS resource set comprising one or more RS resources; sending a second information block, the second information block indicating at least one identifier;
receiving first channel information,
wherein a first code is used for generating the first channel information, and a measurement for at least one RS resource in the first RS resource set is used for generating an input of the first code; the at least one identifier is used for determining a parameter group used by the first code, the parameter group used by the first code being one parameter group amongst J parameter groups, and J being a positive integer greater than 1; and at least one parameter group amongst the J parameter groups is obtained by training.

23. The method used in the second node device according to claim 22, wherein
the at least one identifier is used for indicating or identifying a parameter group used by the first code; or the at least one identifier is used for indicating or identifying at least one of a parameter group used by the first code or a parameter group used by a first decode, and the first channel information is used by a second node for an input of the first decode or the first channel information is used by a second node for generating an input of the first decode; or the at least one identifier is used for indicating or identifying at least one TCI state; or the at least one identifier is used for indicating or identifying at least one RS resource; or the at least one identifier is used for indicating or identifying at least one training data set.

24. The method used in the second node device according to claim 22 or 23, wherein
the training of at least one parameter group amongst the J parameter groups is performed at a sender of the first channel information, or the training of at least one parameter group amongst the J parameter groups is performed by the second node, or a performer of the training of at least one parameter group amongst the J parameter groups depends on a training type of at least one parameter group amongst the J parameter groups.

25. The method used in the second node device according to any one of claims 22 to 24, wherein
the at least one identifier depends on the training type of at least one parameter group amongst the J parameter groups.

26. The method used in the second node device according to any one of claims 22 to 25, wherein
any parameter group amongst the J parameter groups is obtained based on training one training data set in J1 training data sets, and J1 is a positive integer.

27. The method used in the second node device according to any one of claims 22 to 26, wherein
the J parameter groups depend on the first RS resource set.

28. The method used in the second node device according to claim 27, wherein
sending a third information block,
wherein the at least one identifier comprises one identifier in N identifiers, the third information block configures or indicates part or all of identifiers in the N identifiers, and N is a positive integer greater than 1; and the first information block and the second information block belong to one identical RRC IE, and the third information block and the second information block belong to different RRC IEs; or
the first information block and the second information block respectively comprise different RRC IEs; the first information block comprises a report configuration of the first channel information; and the second information block is further used for indicating at least one report configuration, and one report configuration in the at least one report configuration comprises a report configuration of the first channel information.
